(19) Europäisches Patentamt
European Patent Office
Office européen des brevets

(11) EP 2 569 376 B1

# (12) EUROPÄISCHE PATENTSCHRIFT

(45) Veröffentlichungstag und Bekanntmachung des Hinweises auf die Patenterteilung:
**11.09.2013 Patentblatt 2013/37**

(21) Anmeldenummer: **11721430.4**

(22) Anmeldetag: **10.05.2011**

(51) Int Cl.:
***C09C 1/64*** (2006.01) ***C09C 1/66*** (2006.01)
***C09C 1/00*** (2006.01)

(86) Internationale Anmeldenummer:
**PCT/EP2011/002318**

(87) Internationale Veröffentlichungsnummer:
**WO 2011/141157 (17.11.2011 Gazette 2011/46)**

## (54) METALL-KATIONEN UND PHOSPHOR- UND/ODER SCHWEFELHALTIGE ANIONEN AUFWEISENDE METALLEFFEKTPIGMENTE, VERFAHREN ZUR HERSTELLUNG DIESER METALLEFFEKTPIGMENTE UND VERWENDUNG

METAL CATIONS AND METAL EFFECT PIGMENTS COMPRISING ANIONS CONTAINING PHOSPHORUS AND/OR SULPHUR, METHOD FOR PRODUCING SAID METAL EFFECT PIGMENTS AND USE THEREOF

PIGMENTS À EFFET MÉTALLIQUE PRÉSENTANT DES CATIONS MÉTALLIQUES ET DES ANIONS CONTENANT DU PHOSPHORE ET/OU DU SOUFRE, PROCÉDÉ DE FABRICATION DE CES PIGMENTS À EFFET MÉTALLIQUE ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.05.2010 DE 102010020507**

(43) Veröffentlichungstag der Anmeldung:
**20.03.2013 Patentblatt 2013/12**

(73) Patentinhaber: **Eckart GmbH**
**91235 Hartenstein (DE)**

(72) Erfinder:
- **WINKELMANN, Pär**
  **90607 Rückersdorf (DE)**
- **NGUYEN, Phu Qui**
  **41238 Mönchengladbach (DE)**

(74) Vertreter: **Walcher, Armin et al**
**Louis, Pöhlau, Lohrentz & Segeth**
**Postfach 3055**
**90014 Nürnberg (DE)**

(56) Entgegenhaltungen:
**EP-A1- 1 990 377** **WO-A1-03/014228**
**WO-A2-2005/063897**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 569 376 B1

## Beschreibung

Die vorliegende Erfindung betrifft mit Siliciumoxid nach Sol-Gel-Verfahren beschichtete Metalleffektpigmente, wobei auf der Metalleffektpigmentoberfläche und/oder in der Siliciumoxidschicht Metallkationen und phosphor- und/oder schwefelhaltigen Anionen enthalten sind. Die Erfindung betrifft ferner ein Verfahren zur Herstellung dieser Metalleffektpigmente als auch deren Verwendung.

Der rasante Anstieg der Verwendung von umweltfreundlichen Wasserlacken im Automobilbereich und in Industrielacken erforderte die Entwicklung korrosionsgeschützter Metalleffektpigmente. Insbesondere die weit verbreiteten Aluminiumeffektpigmente neigen in den basisch eingestellten Wasserlacken zur Oxidation, bei der Wasserstoff entsteht und das Aluminiumeffektpigment oxidiert wird. Die Oxidation führt dabei zu einem Verlust des Spiegelglanzes, was auch als Vergrauung bezeichnet wird. Der entstehende Wasserstoff stellt ein erhebliches Gefährdungspotential dar, zumal eine mögliche Knallgasexplosion auch nachfolgend zu einem Brand der feinteiligen Metallpigmente führen kann.

Äußerst wirkungsvoll korrosionsgeschützte Aluminiumeffektpigmente werden nach dem Chromatierverfahren (EP 0 259 592) hergestellt und sind unter dem Handelsnamen Hydrolux® von der Firma Eckart erhältlich. Diese gegenüber Korrosion geschützten Aluminiumeffektpigmente zeichnen sich durch eine ausgezeichnete Gasungsstabilität und eine hervorragende Deckkraft aus. Unter Deckkraft, auch Deckvermögen genannt, wird die pro Gewichtseinheit Pigment abgedeckte Fläche verstanden. Insbesondere ist die Deckkraft der chromatierten Aluminiumeffektpigmente vergleichbar mit der Deckkraft der Aluminiumeffektpigmente vor der Chromatierung.

Nachteiligerweise enthalten die chromatierten Aluminiumeffektpigmente Chromverbindungen. Auch wenn chromatierte Aluminiumeffektpigmente keine nachweisbaren Mengen des giftigen Cr(IV) enthalten, sind sie dennoch aufgrund des Schwermetallgehalts aus ökologischer Sicht nicht vorteilhaft.

Aus diesem Grund wurden mit $SiO_2$ beschichtete Aluminium- oder Goldbronzeeffektpigmente entwickelt. Die Beschichtung mit $SiO_2$ erfolgt vorzugsweise unter Verwendung des Sol- Gel- Prozesses, bei dem es zunächst zu einer Sol- Gel- Einkapselung der Aluminium- bzw. Goldbronzeeffektpigmente und nachfolgend zur Ausbildung einer Siliziumdioxidbeschichtung kommt. Die mit $SiO_2$ beschichteten Aluminium- bzw. Goldbronzeeffektpigmente weisen eine hohe Korrosionsbeständigkeit auf, da durch die Barrierewirkung der Siliziumdioxidbeschichtung die Migration von Wasser oder anderen korrosiven Stoffen an der Pigmentoberfläche verhindert wird.

Die $SiO_2$- Beschichtung erfolgt über ein schonendes, umweltfreundliches Sol- Gel- Verfahren, welches durch Basen katalysiert wird (A. Kiehl, K. Greiwe Progr. in org. Coatings 37 (1999) , 179- 183) . Am Markt erhältliche, unter Verwendung von Sol- Gel- Verfahren mit $SiO_2$ beschichtete Metalleffektpigmente sind Hydrolan® (Aluminiumeffektpigmente) und Dorolan® (Goldbronzeeffektpigmente) von der Firma Eckart. Weitere am Markt erhältliche $SiO_2$- beschichtete Aluminiumeffektpigmente sind beispielsweise Emeral® von der Fa. Toyo, Japan, Aquamet® von der Fa. Schlenk, Deutschland, und Silbercote® von der Fa. Silberline, USA.

Mit $SiO_2$ beschichtete Aluminiumeffektpigmente besitzen in der Regel eine ausreichende Gasungsstabilität. Unter einer ausreichenden Gasungsstabilität wird verstanden, dass es unter Einfluss von Wasser in der Regel zu keiner wesentlichen Entwicklung von Wasserstoff kommt, da das Aluminium relativ effektiv vor dem Angriff durch Wasser geschützt ist. Die Gasungsstabilität hängt jedoch auch von den Umgebungsbedingungen ab, denen das Aluminiumeffektpigment ausgesetzt wird.

Gelegentlich können bei Metalleffektpigmenten mit einem sehr feinen Kornband und einer entsprechend großen spezifischen Oberfläche, d.h. Oberfläche pro Gewichtseinheit Metalleffektpigment, unerwünschte Schwankungen in der Gasungsstabilität auftreten. Die Deckkraft der aus dem Stand der Technik bekannten $SiO_2$-beschichteten Aluminiumeffektpigmente nimmt des Weiteren nachteiligerweise deutlich ab, verglichen mit dem Ausgangsmaterial und im Vergleich zu chromatierten Pigmenten.

Für die Beschichtung von Substraten mit Siliziumdioxid sind im Stand der Technik zwei Methoden als wesentlich beschrieben. Die erste Methode ist die Nutzung von Alkalisilikaten, die durch katalysierte Hydrolyse in Silanole überführt werden, um anschließend zu einem anorganischen Netzwerk zu verschmelzen (R.K. Iler et al US 2885366, 1959; R.K. Iler "The Chemistry of Silica", 1979).

Die zweite Methode ist die Nutzung des Sol- Gel- Prozesses, ausgehend von Alkoxysilanen, die unter Katalyse mit Wasser zu Silanol und Alkohol umgesetzt werden. Bei der herkömmlichen Sol- Gel- Beschichtung von Aluminiumeffektpigmenten unter Verwendung von Alkoxysilanen wird das pulverförmige Ausgangspigment in alkoholischer Phase dispergiert und anschließend unter Wärmezufuhr die Alkoxysilane, Wasser und wenigstens ein basischer oder saurer Katalysator zugegeben.

Bei der Hydrolyse von Tetraethoxysilan- Verbindungen bilden sich Silanolstrukturen der Zusammensetzung $Si(OH)_{4-y}(OCH_2CH_3)_y$ (y= 0- 3) , die Polykondensationsreaktionen eingehen können. An der Pigmentoberfläche entsteht im Verlauf der Reaktion ein kompaktes Siliziumdioxidnetzwerk, das die Pigmentpartikel vollständig einkapselt. Die auf die Pigmentoberfläche frisch gefällte Siliziumdioxidbeschichtung kann darüber hinaus gezielt weiteren Oberflächenmodifikationen unterzogen werden. Beispielsweise können Silane mit wenigstens einem nicht- hydrolysierbaren Substituenten, beispielsweise Alkylsilane, nach Aufbringung der $SiO_2$- Beschichtung hinzugefügt und in- situ hydrolysiert werden,

wobei die Silane mit wenigstens einem nicht- hydrolysierbaren Substituenten über weitere Kondensationsreaktionen fest an bzw. auf der Siliziumdioxidschicht auf der Pigmentoberfläche verankert werden. Der nach Abkühlung und Absaugung der Lösung erhaltene Filterkuchen kann im Vakuum getrocknet und dem bestimmungsgemäßen Einsatz zugeführt werden.

Aus der US 2,885,366 A ist ein basisch katalysiertes Verfahren zur Herstellung eines von mit Metalloxiden oberflächenstabilisierten Produktes, welches auch aus $SiO_2$-beschichteten Metalleffektpigmenten bestehen kann, bekannt.

Die Herstellung von mit reaktiven Orientierungshilfsmitteln beschichteten Effektpigmenten - unter Verwendung eines basischen Katalysators - ist in der DE 198 20 112 A1 beschrieben.

Wasserbasislacke, die mit $SiO_2$ beschichtete Aluminiumeffektpigmente enthalten, sind in der EP 1 332 714 A1 offenbart.

Auch die WO 2004/026268 A2 offenbart ein Verfahren zur Herstellung eines gegenüber Korrosion stabilen Metalleffektpigments für ein kosmetisches Präparat, bei dem der Aluminiumkern mittels Sol- Gel- Prozess, unter Verwendung von geeigneten Katalysatoren, mit einer $SiO_2$- Beschichtung versehen wird.

Die EP 1 756 234 B1 betrifft ein Verfahren zur Herstellung einer wässrigen Beschichtungszusammensetzung, welche wenigstens ein mit Wasser kompatibles filmbildendes Mittel und mit wenigstens einer anorganischen Korrosionsschutzschicht versehene Aluminiumeffektpigmente enthält. Diese Aluminiumeffektpigmente weisen wenigstens eine mittels Sol-Gel-Verfahren erzeugte $SiO_2$-Schicht auf. Einzelheiten zur Stabilisierung gegenüber Korrosion sind diesem Patent nicht zu entnehmen.

Aus der WO 03/014228 A1 sind plättchenförmigen Aluminiumeffektpigmente, die mit freier Phosphorsäure und/ oder Borsäure vorbehandelt werden und anschließend mittels eines Sol-Gel-Prozesses in organischem Lösemittel mit einer $SiO_2$-Schicht versehen werden, bekannt.

In der WO 2006/066825 A2 ist ein Pigment mit einem ähnlichen Aufbau beschrieben, bei dem zusätzlich eine äußere Schicht aus Zinnoxid vorhanden ist.

In der DE 198 36 810 A1 sind mehrschichtige Effektpigmente auf Basis von Metallsubstratplättchen beschrieben. Die Beschichtungen erfolgen in wässrigem Medium und aus diesem Grund müssen die Pigmente zuvor passiviert werden.

Auch die DE 44 37 753 A1 offenbart mehrschichtige Effektpigmente auf Basis von Metallsubstratplättchen. Hierbei kann eine $SiO_2$-Schicht unter anderem mittels Sol-Gel-Verfahren aufgebracht werden. Zuvor können die Metallplättchen passiviert werden.

Die EP 1 619 222 A1 betrifft ein Verfahren zur Herstellung eines mit einer Molybdän- und/oder $SiO_2$-Beschichtung versehenen Aluminiumeffektpigments für wasserbasierende Farben unter Verwendung von organischen Basen, wie z.B. Ethanolamin, oder anorganischer oder organischer Säuren, wie z.B. Schwefelsäure oder Oxalsäure, als Katalysatoren.

Die WO 03/095564 A1 betrifft ein Verfahren zur Herstellung von goniochromatischen Glanzpigmenten mit einer Interferenzfarben zeigenden Beschichtung, in die ein polares organisches Lösungsmittel eingelagert ist. Zur Herstellung dieser goniochromatischen Glanzpigmente werden die Pigmentteilchen, wie beispielsweise gegenüber Korrosion stabilisierte Aluminiumeffektpigmente, zunächst mit einer dielektrischen, niedrigbrechenden Schicht, wie beispielsweise Siliciumdioxid, belegt und anschließend mit einer reflektierenden Beschichtung versehen.

Die DE 100 01 437 A1 offenbart ein Halbfabrikat, bei dem ein vorstabilisiertes Metalleffektpigment mit Korrosionsschutzpigmenten in Wasser dispergiert wird. Die Gasungsstabilität dieser Produkte ist jedoch nicht sehr hoch und durch die Zugabe der Korrosionsschutzpigmente können Unverträglichkeiten mit dem anzuwendenden Lacksystem auftreten.

Auch in den US 5,348,579 und US 5,36,469 werden Metalleffektpigmente, die mit Korrosionsschutzpigmenten behandelt werden, offenbart. Die Pigmente weisen jedoch keine $SiO_2$-Beschichtung auf und sind nur unzureichend gasungsstabil.

In der WO 2004/092284 A1 werden Effektpigmente offenbart, die calcinierte Metalloxidschichten, die in Mischung mit Phosphaten vorliegen können, aufweisen. Wenn Metalleffektpigmente als Substrat verwendet werden, kann das so erhaltene beschichtete Metalleffektpigment aus sicherheitstechnischen Gründen nicht calciniert werden. Bei den üblichen Calcinierungstemperaturen können die Schmelzpunkte der Metalle, der beispielsweise bei Aluminium bei 630 °C liegt, überschritten werden. Des Weiteren besteht insbesondere bei Aluminium die große Gefahr, dass es bei hohen Temperaturen zu der bekannten stark exothermen aluminothermischen Reaktion mit den aufgebrachten Metalloxidschichten kommt, was insbesondere bei den hohen spezifischen Oberflächen und dem innigen Kontakt der Schichten leicht eintritt.

Die US 6,379,804 B1 offenbart Beschichtungen, die mit reinem $SiO_2$ ummantelte Metalleffektpigmente, die aus Gruppe, die aus Nickel, Nickellegierung, Eisen, Eisenlegierung, Gold, Goldlegierung, Silber, Silberlegierung, Platin und Platinlegierung besteht, ausgewählt werden, enthält. Unter der reinen $SiO_2$-Schicht kann eine separate dünne Phosphatschicht, die direkt auf der Metallpigmentoberfläche unter Verwendung von Triethylphosphat aufgebracht ist, vorgesehen sein.

Die bekannten Verfahren zur $SiO_2$-Beschichtung von Metalleffektpigmenten haben jedoch den Nachteil, dass sie nicht immer - insbesondere bei sehr feinen Metalleffektpigmenten - eine ausreichende Korrosionsstabilität, insbesondere Gasungsstabilität der damit erhältlichen Metalleffektpigmente gewährleisten. Es existiert ein fortwährendes Bedürfnis, die Gasungsstabilität der Metalleffektpigmente weiter zu erhöhen. Zudem tritt meistens ein deutlicher Verlust der Deckkraft durch die $SiO_2$-Beschichtung ein.

Metalleffektpigmente, deren Metalle aus der Gruppe, die aus Aluminium, Kupfer, und Legierungen davon besteht, ausgewählt werden, sind gegenüber Korrosion sehr empfindlich. So werden Aluminium, Kupfer sowie deren Legierungen, wie beispielsweise Messing oder Bronze, von Wasser und/ oder harschen Umgebungsbedingungen leicht oxidiert. Durch eine Oxidation dieser Metalle werden die optischen Eigenschaften dieser Metalleffektpigmente beeinträchtigt, was äußerst unerwünscht ist.

Aufgabe der Erfindung ist es, Metalleffektpigmente, deren Metalle aus der Gruppe, die aus Aluminium, Kupfer und Legierungen davon besteht, ausgewählt werden, bereitzustellen, die gegenüber Korrosion stabilisiert sind und verbesserte Anwendungseigenschaften aufweisen. Insbesondere sollen die bereitzustellenden Metalleffektpigmente eine verbesserte Gasungsstabilität und/oder Deckkraft aufweisen. Dabei sollen die optischen Eigenschaften der Metalleffektpigmente wie Glanz und Hell-Dunkel-Flop weitgehend nicht beeinträchtigt werden.

Die der Erfindung zugrundeliegende Aufgabe wird durch Bereitstellung eines Metalleffektpigments, ausgewählt aus der Gruppe, bestehend aus plättchenförmigem Aluminium, plättchenförmigen Metallpigmenten mit einem Kupferanteil von 60 bis 100 Gew.-% und Mischungen davon, aufweisend eine Beschichtung aus Siliciumoxid $SiO_x$, wobei x eine Zahl von 1 bis 2 ist, gelöst, wobei das beschichtete Metalleffektpigment einerseits Metallkationen und andererseits phosphor- und/oder schwefelhaltige Anionen enthält, wobei die Metallkationen und phosphor- und/oder schwefelhaltigen Anionen jeweils unabhängig voneinander auf der Metalleffektpigmentoberfläche und/oder in der Siliciumoxidschicht $SiO_x$ vorhanden sind und wobei das Elementverhältnis in Atomanteilen von Metallkation MK und Phosphor P und/oder Schwefel S zu Silicium Si jeweils gemäß den Formeln (I) und (II)

$$100\% \times (MK+P) / Si \qquad (I)$$

und/oder

$$100\% \times (MK+S) / Si \qquad (II)$$

definiert ist und insgesamt in einem Bereich von 0,5 bis 35 % liegt.

Bevorzugte Weiterbildungen sind in den Unteransprüchen 2 bis 11 angegeben.

Eine weitere Aufgabe der Erfindung ist es, ein Verfahren zum Herstellen von Metalleffektpigmenten, deren Metalle aus der Gruppe, die aus Aluminium, Kupfer, und Legierungen davon besteht, ausgewählt werden, mit verbesserter Deckkraft und Gasungsstabilität bereitzustellen.

Die der Erfindung zugrundeliegende Aufgabe wird weiterhin durch Bereitstellung eines Verfahrens zum Herstellen von mit Siliciumoxid beschichteten Metalleffektpigmenten gelöst, wobei das Verfahren folgende Schritte umfasst:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und Metallkationen zu den Metalleffektpigmenten vor oder während Schritt (a) unter Aufnahme von phosphor- und/oder schwefelhaltigen Anionen und Metallkationen auf die Metalleffektpigmentoberfläche und/oder in die Siliciumoxidschicht,
(c) optional Aufbringen einer Oberflächenmodifizierung auf die Siliciumoxidoberfläche

Bevorzugte Weiterbildungen sind in den Unteransprüchen 13 und 14 angegeben.

Des Weiteren wird die Aufgabe der Erfindung auch durch die Verwendung von Metalleffektpigment nach einem der Ansprüche 1 bis 11 in Kosmetika, Kunststoffen und Beschichtungszusammensetzungen, vorzugsweise Farben, Druckfarben, Lacken, Pulverlacken, gelöst.

Schließlich wird die Aufgabe der Erfindung auch durch Bereitstellung eines Gegenstands gelöst, wobei der Gegenstand Metalleffektpigmente gemäß Ansprüche 1 bis 11 aufweist und/oder enthält.

Im Folgenden werden unter dem Begriff Metalleffektpigmente nur solche verstanden, deren Metalle aus der Gruppe, die aus Aluminium, Kupfer und deren Legierungen davon besteht, wie in Anspruch 1 angegeben, ausgewählt werden, sofern nicht anders angegeben.

Gemäß einer bevorzugten Ausführungsform handelt es sich bei den Legierungseffektpigmenten um Zink und Kupfer enthaltende Messingpigmente, die auch als Goldbronzen bezeichnet werden.

Messingeffektpigmente, üblicherweise als "Goldbronze" bezeichnet, weisen bevorzugt einen Kupfergehalt von 70 bis weniger als 100 Gew.- %, vorzugsweise 75 bis 90 Gew.- %, auf. Der Zinkgehalt liegt vorzugsweise entsprechend zwischen 30 und 10 Gew.- %, beispielsweise bei 25 Gew.- %, wobei gegebenenfalls bis zu 2 Gew.- %, bevorzugt unter 1 Gew.- %, Verunreinigungen anderer Metalle vorhanden sein können.

Bei Messingeffektpigmenten oder Goldbronze-Effektpigmenten wird der Farbton durch das Kupfer-Zink-Verhältnis der Legierung bestimmt.

Goldbronze- Effektpigmente werden in charakteristischen Naturfarbtönen als "Bleichgold" mit einem Kupferanteil von ca. 90 % und einem Rest von ca. 10 Gew.- % Zink, als "Reichbleichgold" mit einem Kupferanteil von ca. 85 Gew.- % und einem Rest von ca. 15 Gew.- % Zink sowie als "Reichgold" mit einem Kupferanteil von ca. 70 Gew.- % und einem Rest von ca. 30 Gew.- % Zink, kommerziell gehandelt. Die Angabe in Gew.- % bezieht sich dabei jeweils auf den Gesamtmetallgehalt des Metalleffektpigmentes, d.h. das unbeschichtete Metalleffektpigment.

Bei einer bevorzugten Ausführungsform enthalten die Messingeffektpigmente eine "Verunreinigung" mit beispielsweise 0,1 bis 2 Gew.-%, vorzugsweise 0,5 bis 1,8 Gew.-%, Aluminium, jeweils bezogen auf den Gesamtmetallgehalt des unbeschichteten Metalleffektpigmentes. Die Legierungen, die einen solchen Anteil an Aluminium haben, haben sich als korrosionsstabiler, verglichen mit ausschließlich Kupfer und Zink enthaltenden Messingeffektpigmenten, erwiesen.

Gemäß einer bevorzugten Variante der Erfindung sind die auf der Metalleffektpigmentoberfläche vorhandenen Metallkationen zu mindestens teilweise verschieden, vorzugsweise verschieden, von dem Metall oder den Metallen, die in dem beschichteten plättchenförmigen Metalleffektpigment enthalten sind.

Gemäß einer bevorzugten Variante der Erfindung sind die auf der Metalleffektpigmentoberfläche und/oder in der Siliciumoxidschicht ($SiO_x$) vorhandenen Metallkationen zumindest teilweise verschieden, vorzugsweise verschieden, von dem Metall oder den Metallen, die in dem plättchenförmigen Metalleffektpigment enthalten sind.

Erfindungsgemäß wird unter der Angabe "auf der Metalleffektpigmentoberfläche" sowohl die Metalleffektpigmentoberfläche als solche als auch eine Metalleffektpigmentoberfläche, auf der sich eine Metalloxidschicht ausgebildet hat oder eine Metalloxidschicht ausgebildet ist, verstanden. So weisen beispielsweise Aluminiumeffektpigmente eine Aluminiumoxidschicht oder kupferhaltige Effektpigmente eine entsprechende kupferoxidhaltige Schicht aus. Die Dicke der Metalloxidschicht liegt dabei üblicherweise in einem Bereich von 0, 3 bis zu 20 nm, beispielsweise von 1 nm bis 10 nm. Bei diesen Metalloxidschichten kann es sich um die natürlichen Metalloxidschichten handeln, die sich stets durch den Kontakt der Metalloberflächen mit Luft unter atmosphärischen Bedingungen ausbilden.

Im Fall von kupferhaltigen Metalleffektpigmenten kann jedoch vor der erfindungsgemäßen Beschichtung eine Metalloxidschicht, beispielsweise durch die wohlbekannte Feuerfärbung, gebildet worden sein. Hierdurch entstehen Anlauffarben, die aufgrund von Interferenzeffekten und der Eigenfärbung der Schicht, zu unterschiedlichen Farbtönen im Gold-Rot- Bereich dieser Metalleffektpigmente führen.

Im Fall von Aluminiumpigmenten können neben den sehr dünnen (Schichtdicke: ca. 3- 5 nm) natürlichen Oxidschichten sich infolge des Sol- Gel- Prozesses, bei dem ja Wasser zugegen ist, während der $SiO_x$- Abscheidung weiteres Aluminiumoxid, und/ oder Aluminiumhydroxyd und/ oder Aluminiumoxidhydrat bilden.

Die Erfinder haben überraschend festgestellt, dass die Stabilität von mit Siliciumoxid $SiO_x$ beschichteten Metalleffektpigmenten gegenüber Korrosion signifikant verbessert ist, wenn phosphorhaltige und/oder schwefelhaltige Anionen und Metallkationen unabhängig voneinander auf der Metalleffektpigmentoberfläche und/oder in der Siliciumoxidschicht ($SiO_x$) in den vorstehend angegebenen Verhältnissen vorhanden sind.

Bei dem Siliciumoxid $SiO_x$ handelt es sich um Siliciumoxid, wobei x eine Zahl aus dem Bereich von 1 bis 2 ist. Besonders bevorzugt ist x = 1,8 bis 2,0. Ganz besonders bevorzugt handelt es sich um ein nach Sol-Gel-Verfahren hergestelltes und nichtcalciniertes Siliciumoxid, welches als $SiO_2$ bezeichnet werden kann. Hierbei ist eingeschlossen, dass gewisse Restmengen an Wasser und/oder organischem Lösemittel in dem Oxid vorhanden sind und dieses mithin auch in einem Gel-artigen Zustand vorliegen kann.

Calcinierte $SiO_2$- Beschichtungen, wie sie beispielsweise in der WO 2004/092284 A1 beschrieben sind, lassen sich auf Metalleffektpigmenten kaum aufbringen. Zum einen schmelzen viele der gebräuchlichen Metalle, wie beispielsweise Aluminium, vor dem Erreichen der typischen Calcinierungstemperaturen, wobei die Metalleffektpigmente zerstört werden. Eine sicherheitstechnische Gefahr liegt bei Aluminiumpigmenten ferner in dem Starten einer Thermitreaktion. Aluminiumoxid ($Al_2O_3$) ist bekanntlich das thermodynamisch stabilste Metalloxid, und durch eine Beschichtung eines Aluminiumeffektpigments mit Siliciumoxid ist aufgrund der hohen spezifischen Oberfläche des Metalleffektpigments und der innigen Berührung der Reaktionspartner ein hohes Potential zum Starten einer Thermitreaktion gegeben. Die Gefahr der Aktivierung dieser Reaktion durch Calcinierung (selbst unterhalb des Schmelzpunktes des Aluminiums) ist zu hoch, um einen sicheren Herstellungsprozess durchführen zu können. Somit weisen die erfindungsgemäßen Metalleffektpigmente eine nichtcalcinierte Siliciumoxidschicht auf.

Erstaunlicherweise reichen bereits geringe Mengen an Metallkationen und phosphorhaltigen und/oder schwefelhaltigen Anionen auf der Metalleffektpigmentoberfläche und/oder in der siliciumoxidhaltigen Schicht aus, um die

Beständigkeit der Metalleffektpigmente gegenüber Korrosion zu erhöhen.

Das Verhältnis von Metallkationen MK und phosphorhaltigen Anionen P und/oder schwefelhaltigen Anionen S einerseits zu Silicium Si andererseits wird auf Basis der Atomanteile der Elemente des Metalls des Metallkations und von Phosphor und/oder Schwefel berechnet und auf den Atomanteil des vorhandenen Siliciums gemäß Formel (I)

$$100\% \times (MK+P) / Si \qquad (I)$$

und/oder gemäß Formel (II)

$$100\% \times (MK+S) / Si \qquad (II)$$

bezogen. Erfindungsgemäß liegen die Elementverhältnisse P und S, jeweils bezogen auf den Anteil von Silicium aus der Siliciumoxidschicht, insgesamt, d.h. in der Summe in einem Bereich von 0,5 bis 35 %, weiter bevorzugt von insgesamt 0,8 bis 30 %, noch weiter bevorzugt von insgesamt 1,0 bis 20 %. Als sehr geeignet hat sich ein Elementverhältnis von insgesamt 0,8 bis 18 % erwiesen. Vorzugsweise liegt der Gehalt an Phosphor und/oder Schwefel in einem Bereich von insgesamt 1 bis 15 % und weiter bevorzugt von insgesamt 1,5 bis 9 %. Wenn nur phosphorhaltige oder sulfathaltige Anionen vorhanden sind, kann deren jeweiliges Elementverhältnis ebenfalls in den vorstehend genannten Anteilen, bezogen auf den Anteil von Si aus der Siliciumoxidschicht, vorliegen.

Überraschenderweise bewirkt die Behandlung der Metalleffektpigmentoberfläche mit Kationen und mit phosphor- und/oder schwefelhaltigen Anionen eine Verbesserung der Stabilisierung der Metalleffektpigmente gegenüber Korrosion, verglichen mit einer Behandlung der Metalleffektpigmentoberfläche mit reiner Phosphorsäure oder mit organischen Phosphorsäureestern, d.h. ohne Kationen, wie beispielsweise Triethylphosphat, wobei jeweils nachträglich eine Siliciumoxidschicht aufgebracht ist. Die Gründe für diesen Effekt sind bislang noch nicht verstanden.

Des Weiteren wird überraschenderweise eine signifikante Stabilisierung gegenüber Korrosion auch dann erreicht, wenn die Kationen und phosphor- und/ oder schwefelhaltigen Anionen in der Siliciumoxidschicht ($SiO_x$- Schicht) vorliegen. Gemäß einer weiteren erfindungsgemäßen Variante sind die Metallkationen und die phosphor- und/ oder schwefelhaltige Anionen überwiegend in der $SiO_x$- Schicht vorhanden. Hierbei ist weiter bevorzugt, dass die Konzentration der phosphor- und/ oder schwefelhaltigen Anionen entlang der Schichtdicke der $SiO_x$- Schicht weitgehend konstant ist.

Unter dem Begriff "überwiegend" wird in diesem Zusammenhang und im Folgenden erfindungsgemäß mehr als 50 %, vorzugsweise mehr als 59 %, weiter bevorzugt mehr als 66 % verstanden. Unter dem Begriff "überwiegend" wird mithin auch mehr als 76 %, noch weiter bevorzugt mehr als 86 %, wie beispielsweise mehr als 96 % verstanden.

Gemäß einer weiteren erfindungsgemäßen Variante sind die Metallkationen und die phosphor- und/oder schwefelhaltige Anionen überwiegend auf der Metalleffektpigmentoberfläche vorhanden.

Gemäß einer weiteren erfindungsgemäßen Variante liegen die Metallkationen mit den phosphor- und/oder schwefelhaltigen Anionen wenigstens teilweise miteinander als schwerlösliches Salz vor.

Gemäß einer weiteren erfindungsgemäßen Variante sind die phosphor- und/oder schwefelhaltigen Anionen überwiegend auf der Metalleffektpigmentoberfläche und die Metallkationen überwiegend in der $SiO_x$-Schicht vorhanden.

Gemäß einer weiteren erfindungsgemäßen Variante sind die Metallkationen überwiegend auf der Metalleffektpigmentoberfläche und die phosphor- und/oder schwefelhaltigen Anionen überwiegend in der $SiO_x$-Schicht vorhanden.

Gemäß einer weiteren erfindungsgemäßen Variante werden die Metallkationen für die phosphorhaltigen Anionen aus der Gruppe, die aus Ag(I), Cu(II), Cd(II), Cr((III), Co(II), Pb(II), Hg(I), Hg(II), Mg(II), Al(III), Zn(II), Sn(II), Ca(II), Sr(II), Ba(II), Mn(II), Bi(III), Zr(IV), Ni(II), Fe(II), Fe(III) und Mischungen davon sowie deren Mischungen mit Ammoniumionen besteht, ausgewählt.

Gemäß einer weiteren erfindungsgemäßen Variante werden die Metallkationen für Sulfatanionen als schwefelhaltige Anionen aus der Gruppe, die aus Ag(I), Sb(III), Ca(II), Ba(II), Sr(II), Pb(II), Fe(III) und Mischungen davon besteht, ausgewählt. Besonders bevorzugt sind hierbei Ba(II), Ca(II) und Fe(III) und ganz besonders bevorzugt Ba(II)..

Gemäß einer weiteren erfindungsgemäßen Variante werden die Metallkationen für Sulfidanionen als schwefelhaltige Anionen aus der Gruppe, die aus Ag(I), Sb(III), Bi(III), Cd(II), Co(II), Cu(II), Ca(II), Ba(II), Pb(II), Mn(II), Ni(II), Sn(II, Sn(IV), Zn(II), Fe(II) und Mischungen davon besteht, ausgewählt. Besonders bevorzugt sind Ag(I), Cu(II), Fe(II) und Zn(II) sowie deren Mischungen.

Ganz besonders bevorzugt sind hierbei Zn(II) und Fe(II).

Äußerst vorteilhaft erlaubt die vorliegende Erfindung die Bereitstellung von gegenüber Korrosion stabilisierten Metalleffektpigmenten, deren Metall aus der Gruppe, die aus Aluminium, Kupfer und deren Legierungen, ausgewählt werden, ohne dabei eine wesentliche Einbuße, vorzugsweise ohne Einbuße, der optischen Eigenschaften dieser Me-

talleffektpigmente, verglichen mit $SiO_2$ beschichteten Metalleffektpigmenten, hinnehmen zu müssen.

Es ist äußerst überraschend, dass mit derart geringen Anteilen an phosphor- und/oder schwefelhaltigen Anionen und Metallkationen eine erstaunliche Verbesserung der Gasungsstabilität erreicht werden konnte. Hierfür haben die Erfinder derzeit noch keine schlüssige Erklärung.

Bei höheren Anteilen von mehr als insgesamt 30 % nehmen die optischen Eigenschaften der erfindungsgemäßen Metalleffektpigmente deutlich ab. So wird bei höheren Gehalten beispielsweise ein "Weißen" des Pigments beobachtet, was zu einem verminderten Glanz und einem verminderten Hell-Dunkel-Flop führt.

Die geringen Mengen an phosphor- und/oder schwefelhaltigen Anionen und Metallkationen bewirken ebenfalls, dass diese keine merkliche Eigenfarbe aufweisen und damit die optischen Eigenschaften des Metalleffektpigments verändern.

Der Gehalt an Siliciumoxid, vorzugsweise $SiO_2$, liegt vorzugsweise in einem Bereich von 2 Gew.-% bis 25 Gew.-%, vorzugsweise 3 Gew.-% bis 22 Gew.-%, noch weiter bevorzugt von 4 bis 20 Gew.-%, noch weiter bevorzugt von 5 Gew.-% bis 15 Gew.-%, jeweils bezogen auf dass Gesamtgewicht des erfindungsgemäßen Metalleffektpigmentsubstrats. Hierbei wird der Siliciumoxidgehalt als $SiO_2$ gerechnet.

Der Gehalt an Siliciumoxid, vorzugsweise $SiO_2$, steigt bei Pigmenten mit hoher spezifischer Oberfläche an. Metalleffektpigmente mit hoher spezifischer Oberfläche sind insbesondere feine und dünne Pigmente. So wird beispielsweise bei PVD-Aluminiumpigmenten der $SiO_2$-Gehalt eher im oberen Bereich liegen und bei gewöhnlichen Silberdollar- oder Cornflakepigmenten sich eher am unteren Mengenbereich orientieren. Dabei wird die Menge an Siliciumoxid, vorzugsweise $SiO_2$, vorzugsweise maximal so gewählt, dass die gewünschte Gasungsstabilität erreicht wird. Wenn zuviel Siliciumoxid, vorzugsweise $SiO_2$, aufgebracht wird, d.h. mehr Siliciumoxid als zum Erhalt der Gasungsstabilität erforderlich ist, werden nur die Deckkraft und auch die optischen Eigenschaften negativ beeinflusst, ohne dass ein weiterer Vorteil erhalten wird.

Vorzugsweise liegt der auf Phosphor und/oder Schwefel bezogene Gehalt in einem Bereich von 0,01 bis 1,00 Gew.-%, besonders bevorzugt 0,02 bis 0,50 Gew-% und ganz besonders bevorzugt von 0,05 bis 0,15 Gew.-%, jeweils bezogen auf das gesamte Metalleffektpigment.

Vorzugsweise liegt der Gehalt an Metallkationen in einem Bereich von 0,03 bis 1,4 Gew.-%, besonders bevorzugt 0,02 bis 1,0 Gew-% und ganz besonders bevorzugt von 0,05 bis 0,5 Gew.-%, jeweils bezogen auf das gesamte Metalleffektpigment.

Das molare Verhältnis von MK:P beziehungsweise von MK:S liegt vorzugsweise in einem Bereich von 10:1 bis 1:10, vorzugsweise von 5:1 bis 1:5, weiter bevorzugt von 2:1 zu 1:2. Äußerst bevorzugt ist, dass die Metallkationen und die phosphorhaltigen und/oder schwefelhaltigen Anionen in einem stöchiometrischen Verhältnis vorliegen, wobei dieses Verhältnis nicht äquimolar sein muss aber sein kann.

Gemäß einer bevorzugten Weiterbildung der Erfindung werden die Metallkationen MK derart gewählt, dass sie mit den phosphorhaltigen und/oder schwefelhaltigen Anionen in wässriger Lösung innerhalb eines pH-Bereichs von 5 bis 8 jeweils ein schwerlösliches Salz zu bilden vermögen.

Gemäß einer weiter bevorzugten Weiterbildung der Erfindung werden die Metallkationen derart gewählt, dass sie in Wasser innerhalb eines pH-Bereichs von 5 bis 8 und bei einer Temperatur von 25 °C schwerlösliche Phosphate ($PO_4^{3-}$) und/oder Hydrogenphosphate ($HPO_4^{2-}$) und/oder Dihydrogenphosphate ($H_2PO_4^-$) und/oder Sulfate ($SO_4^{2-}$) bilden.

Unter "schwerlöslich" wird erfindungsgemäß im Fall von phosphorhaltigen Anionen, insbesondere von Phosphaten, verstanden, dass das entsprechende Löslichkeitsprodukt aus Metallkation und phosphorhaltigem Anion, insbesondere Phosphat (en) , in einem pH- Bereich von 5 bis 8 Werte von weniger als $10^{-10}$ $(mol/l)^{m+n}$, vorzugsweise weniger als $10^{-15}$ $(mol/l)^{m+n}$, noch weiter bevorzugt weniger als $10^{-20}$ $(mol/l)^{m+n}$ aufweist. Hierbei ist m der stöchiometrische Koeffizient der Metallkationen und n der stöchiometrische Koeffizient der phosphorhaltigen Anionen, insbesondere Phosphation (en) .

Bei schwefelhaltigen Anionen, insbesondere bei Sulfaten, wird erfindungsgemäß unter "schwerlöslich" verstanden, dass das entsprechende Löslichkeitsprodukt aus Metallkation und schwefelhaltigem Anion, insbesondere Sulfat, Werte von weniger als $10^{-5}$ $(mol/l)^{m+k}$ und bevorzugt weniger als $10^{-8}$ $(mol/l)^{m+k}$ auf, wobei m der stöchiometrische Koeffizient der Metallkationen und k der stöchiometrische Koeffizient der schwefelhaltigen Anionen, insbesondere von Sulfatanionen, ist.

Als bevorzugte Anionen werden phosphorhaltige Anionen, weiter bevorzugt Phosphationen, verwendet.

Gemäß einer bevorzugten Weiterbildung der Erfindung werden im Fall phosphorhaltiger Anionen die Metallkationen aus der Gruppe, die aus Ag(I), Cu(II), Cd(II), Cr((III), Co(II), Pb(II), Hg(I), Hg(II), Mg(II), Al(III), Zn(II), Sn(II), Ca (II), Sr(II), Ba(II), Mn(II), Ni(II), Bi(III), Zr(IV), Fe(II), Fe(III) und Mischungen davon sowie deren Mischungen mit Ammoniumionen besteht, ausgewählt.

Gemäß einer besonders bevorzugten Weiterbildung der Erfindung werden im Fall phosphorhaltiger Anionen die Metallkationen aus der Gruppe, die aus Ag(I), Cu(II), Mg(II), Al(III), Zn(II), Sn(II), Ca(II), Sr(II), Mn(II), Ni(II), Zr(IV), Fe(II), Fe(III) und Mischungen davon sowie deren Mischungen mit Ammoniumionen besteht, ausgewählt. Diese Metallkationen weisen in den geringen Mengen, in denen sie im erfindungsgemäßen Metalleffektpigment vorliegen, weitgehend keine Toxizität auf und sind daher in vielseitigeren Anwendungen verwendbar.

Gemäß einer weiter besonders bevorzugten Weiterbildung der Erfindung werden im Fall phosphorhaltiger Anionen die Metallkationen aus der Gruppe, die aus Mg(II), Al(III), Zn(II), Ca(II), Fe(II), Fe(III) und Mischungen davon besteht, ausgewählt.

Als Metallkationen haben sich im Fall phosphorhaltiger Anionen Fe (II) , Fe (III) , Al (III) , Ca (II) und Mischungen davon als sehr geeignet erwiesen. Gemäß einer sehr bevorzugten Weiterbildung werden als Kationen Fe (II) verwendet. Dabei können die zunächst eingesetzten Fe (II)- Kationen im Verlauf der Reaktion, beispielsweise durch anwesenden Sauerstoff, wenigstens teilweise zu Fe (III)- Ionen oxidiert werden.

Gemäß einer besonders bevorzugten Variante der Erfindung liegen die Metallkationen und die phosphor- und/ oder schwefelhaltigen Anionen in einem solchen stöchiometrischen Verhältnis vor, dass wenigstens teilweise Salzbildung erfolgt, d.h. dass die Metallkationen und die phosphor- und/oder schwefelhaltigen Anionen wenigstens teilweise und bevorzugt weitgehend vollständig als Salz vorliegen. Diese bevorzugte Variante gilt für die Varianten, bei denen das Metallkation und die phosphor- und/oder schwefelhaltigen Anionen überwiegend beide entweder in der $SiO_x$-Schicht oder überwiegend auf der Metalleffektpigmentoberfläche vorhanden sind.

Gemäß einer weiteren Variante der Erfindung liegen wenigstens 55 Gew.- %, weiter bevorzugt wenigstens 70 Gew.- %, noch weiter bevorzugt wenigstens 92 Gew.- %, der Metallkationen und der phosphorhaltigen und/ oder schwefelhaltigen Anionen zusammen als Salz in der $SiO_x$- Schicht, vorzugsweise $SiO_2$- Schicht, und/ oder auf der Metalleffektpigmentoberfläche vor, wobei sich die Angaben jeweils auf das Gesamtgewicht an Metallkationen und phosphorhaltigen und/ oder schwefelhaltigen Anionen beziehen. Als sehr geeignet hat sich erwiesen, wenn wenigstens 95 Gew.- %, weiter wenigstens 98 Gew.- %, der Metallkationen und der phosphorhaltigen und/ oder schwefelhaltigen Anionen zusammen in Salzform vorliegen, wobei sich die Angaben jeweils auf das Gesamtgewicht an Metallkationen und phosphorhaltigen und/ oder schwefelhaltigen Anionen beziehen. Gemäß einer weiteren bevorzugten Ausführungsform der Erfindung liegen die Metallkationen und phosphorhaltigen und/ oder schwefelhaltigen Anionen im Wesentlichen vollständig, vorzugsweise vollständig, als Salz, vorzugsweise als schwerlösliches Salz in der $SiO_x$- Schicht, vorzugsweise $SiO_2$- Schicht, und/ oder auf der Metalleffektpigmentoberfläche vor.

Die gebildeten Salze müssen hierbei nicht nur auf die oben bevorzugten Metallkationen beschränkt sein, sondern können auch in Mischung mit beispielsweise Ammoniumionen, wie beispielsweise als $Mg(NH_4)^{3+}$, vorliegen.

Die schwerlöslichen Salze können in der $SiO_x$- Schicht, vorzugsweise $SiO_2$- Schicht, und/ oder auf der Metalleffektpigmentoberfläche in einer weitgehend molekularen oder auch in einer kolloidalen Form vorliegen. Sie können beispielsweise weitgehend als kolloidale Partikel, vorzugsweise mit Dimensionen im Bereich von durchschnittlich 1 bis 100 nm, vorliegen.

Bei den phosphorhaltigen Anionen handelt es sich vorzugsweise um Phosphorsäureanionen, phosphorige Säureanionen, Phosphonsäureanionen, Phosphinsäureanionen oder deren Salze, d.h. Phosphate, Phosphite, Phosphonate bzw. Phosphinite, oder deren Derivate. Selbstverständlich kann es sich auch um Peroxoverbindungen und/ oder Polysäureanionen der vorgenannten Säurenanionen oder deren Derivaten handeln. Bei den Derivaten handelt es sich vorzugsweise um Ester, beispielsweise Alkylester, der vorgenannten Säureanionen. Die Alkylester der vorgenannten Säureanionen weisen vorzugsweise wenigstens eine Alkylkettenlänge von C1 bis C12, vorzugsweise C2 bis C6, auf.

Als sehr geeignet haben sich Phosphorsäureanionen, insbesondere $H_2PO_4^-$, $H_2P_2O_7^{2-}$, $HPO_4^{2-}$ und/oder $PO_4^{3-}$, oder deren Salze, d.h. Phosphate, oder phosphorige Säureanionen, insbesondere $H_2PO_3^-$, $HPO_3^{2-}$, $H_2P_2O_5^{2-}$ und/oder $PO_3^{3-}$ oder deren Salze, die Phosphite, erwiesen. Des Weiteren können vorzugsweise als phosphorhaltige Anionen Polyphosphate, Metaphosphate, insbesondere Hexametaphosphat, oder Mischungen davon verwendet werden.

Äußerst bevorzugt wird als Phosphorsäureanion $PO_4^{3-}$ verwendet.

Als sehr geeignete Kombination haben sich Fe (II)- und/ oder Fe (III)- und/ oder Al (III)- und/ oder Ca (II)- Ionen und $PO_4^{3-}$ erwiesen. Äußerst geeignete Kombination sind Fe (II)- und/ oder Fe (III)- Ionen und $PO_4^{3-}$.

Bei den während der Herstellung der erfindungsgemäßen Metalleffektpigmente eingesetzten Salzen handelt es sich vorzugsweise um in Wasser lösliche, vorzugsweise leichtlösliche, Salze, insbesondere um Alkalimetallphosphate und/oder -phosphite. Als sehr geeignet haben sich Natrium- und Kaliumsalze der vorgenannte phosphorhaltigen Säureanionen erwiesen.

Als schwefelhaltige Anionen werden bevorzugt Sulfate, Sulfite und Sulfide sowie deren Mischungen verwendet.

Liegt der Schwefel in Form eines Sulfats vor, so sind bevorzugte Metallkationen, die mit den Sulfatanionen in der $SiO_x$- Schicht, bevorzugt $SiO_2$- Schicht, und/ oder auf der Metalleffektpigmentoberfläche vorliegen, Ag (I) , Sb (III) , Ca (II) , Ba (II) , Sr (II) , Pb (II) , Fe (III) und Mischungen davon. Besonders bevorzugt sind hierbei Ba (II) , Ca (II) und Fe (III) und ganz besonders bevorzugt Ba (II) .

Liegt der Schwefel in Form eines Sulfids vor, so sind bevorzugte Metallkationen, die mit Sulfidanionen in der $SiO_x$- Schicht, bevorzugt $SiO_2$- Schicht, und/ oder auf der Metalleffektpigmentoberfläche vorliegen, Ag (I) , Sb (III) , Bi (III) , Cd (II) , Co (II) , Cu (II) , Ca (II) , Ba (II) , Pb (II) , Mn (II) , Ni (II) , Sn (II) , Sn (IV) , Zn (II) , Fe (II) und Mischungen davon. Besonders bevorzugt sind Ag (I) , Cu (II) , Fe (II) und Zn (II) sowie deren Mischungen. Ganz besonders bevorzugt

sind hierbei Zn (II) und Fe (II) .

Zwischen der Metallpigmentoberfläche und der $SiO_x$-, bevorzugt $SiO_2$-Schicht kann bei einer bevorzugten Ausführungsform auch eine Schicht eines Metalloxids, Metallhydroxids und/oder Metalloxidhydrats vorliegen. Bei einer weiter bevorzugten Ausführungsform ist hierbei das Metallkation identisch mit jenem des Substratmaterials. Die Metalloxidschicht bildet sich dabei bevorzugt während der ersten Phasen der $SiO_x$-, bevorzugt $SiO_2$-Abscheidung.

Die Konzentration der Metallkationen sowie der phosphor- und/oder schwefelhaltigen Anionen kann mittels verschiedener Methoden bestimmt werden. So ist beispielsweise möglich, das beschichtete Metalleffektpigment unter definierten Bedingungen in Säure oder Base aufzulösen und eine Elementanalyse mittels ICP-Emissionsspektrometrie (ICP: Inductively-Coupled Plasma) durchzuführen. Hier kann der jeweilige Gehalt der Elemente in einer sehr hohen Genauigkeit bestimmt werden; allerdings kann man nicht die räumliche Lage innerhalb des Schichtaufbaus der erfindungsgemäß beschichteten Metalleffektpigmente bestimmen.

Eine weitere Methode der Bestimmung der Konzentrationen besteht in der EDX-Analyse, wie in der WO 2009/012995 A1; S. 26 - 29 beschrieben, die hiermit unter Bezugnahme aufgenommen ist.

Auch diese Methode liefert Informationen über die Konzentrationen der Elemente und kann räumlich durch entsprechende Fokussierung weitgehend auf den Bereich der $SiO_x$- Schicht, vorzugsweise der $SiO_2$- Schicht, beschränkt werden. Eine genaue räumliche Auflösung ist jedoch nicht möglich.

Die dritte Methode besteht in der Detektion der relevanten Elemente (Al, Si, O, P und/oder S, MK) mittels ESCA-Messungen kombiniert mit Sputterprofilen. Hier wird die Konzentration der Elemente ortsaufgelöst innerhalb der Schichtdicke der $SiO_2$-Schicht sowie ggf. weiterer Schichten erhalten. Die Methode ist ebenfalls in der WO 2009/012995 A1, S. 25 -26 beschrieben. Alternativ oder ergänzend kann hier ebenfalls die Auger-Spektroskopie kombiniert mit Sputterprofilen herangezogen werden.

Selbstverständlich können die oben stehend genannten Methoden auch miteinander in beliebiger Art kombiniert werden, um die Proben zu analysieren.

Besonders bevorzugte Ausführungsformen sind folgende erfindungsgemäß beschichteten Metalleffektpigmente:

A Ein Aluminiumeffektpigment mit einem $SiO_2$- Anteil von 5 bis 15 Gew.- %, gerechnet als $SiO_2$ und bezogen auf das Gewicht des Metalleffektpigments, und Phosphat sowie Fe (II)- und/ oder Fe (III)- Kationen, wobei diese jeweils unabhängig voneinander auf der Aluminiumeffektpigmentoberfläche und/ oder in der $SiO_2$- Schicht vorhanden sind und wobei das Elementverhältnis in Atomanteilen von Fe (II)- und/ oder Fe (III)- Kationen (MK) und Phosphat P zu Silicium Si jeweils gemäß der Formel

$$100\% \times (MK+P) / Si \qquad (I)$$

definiert ist und insgesamt in einem Bereich von 0, 5 bis 25 % liegt.

In weiter besonders bevorzugten Ausführungsformen liegt das Elementverhältnis (MK + P) /Si bei 0, 8 bis 15 % und bei 1 bis 8 %.

In weiter bevorzugten Ausführungsformen zu A sind das Phosphat und die Fe (II)- und/ oder Fe (III)- Kationen überwiegend als schwerlösliches Salz in der $SiO_2$- Schicht vorhanden.

In weiter bevorzugten Ausführungsformen zu A sind das Phosphat und die Fe (II)- und/ oder Fe (III)- Kationen überwiegend als schwerlösliches Salz auf der Aluminiumeffektpigmentoberfläche vorhanden. In diesem Fall ist mit eingeschlossen, dass die Aluminiumeffektpigmentoberfläche auch aus Aluminiumoxid und/ oder Aluminiumhydroxid und/ oder Aluminiumoxidhydrat mit einer durchschnittlichen Schichtdicken von 5 bis 20 nm, bevorzugt von 8 bis 15 nm besteht und das Phosphat und die Fe (II)- und/ oder Fe (III)- Kationen überwiegend in dieser Schicht und/ oder auf dieser Schicht vorhanden ist.

In weiter bevorzugten Ausführungsformen zu A ist das Phosphat überwiegend auf der Aluminiumeffektpigmentoberfläche und die Fe (II)- und/ oder Fe (III)- Kationen überwiegend in der $SiO_2$- Schicht vorhanden. Auch in diesem Fall ist mit eingeschlossen, dass die Aluminiumeffektpigmentoberfläche auch aus Aluminiumoxid und/ oder Aluminiumhydroxid und/ oder Aluminiumoxidhydrat mit einer durchschnittlichen Schichtdicken von 5 bis 20 nm, bevorzugt von 8 bis 15 nm besteht und das Phosphat überwiegend in dieser Schicht und/ oder auf dieser Schicht vorhanden ist.

B Ein Aluminiumeffektpigment mit einem $SiO_2$- Anteil von 5 bis 15 Gew.- %, gerechnet als $SiO_2$ und bezogen auf das Gewicht des Metalleffektpigments, und Phosphat sowie Zn (II)- Kationen, wobei diese jeweils unabhängig voneinander auf der Aluminiumeffektpigmentoberfläche und/ oder in der $SiO_2$- Schicht vorhanden sind und wobei das Elementverhältnis in Atomanteilen von Zn (II)- Kationen (MK) und Phosphat P zu Silicium Si jeweils gemäß der Formel

$$100\% \times (MK+P) / Si \qquad (I)$$

definiert ist und insgesamt in einem Bereich von 0, 5 bis 25 % liegt.
In weiter besonders bevorzugten Ausführungsformen liegt das Elementverhältnis (MK + P) /Si bei 0, 8 bis 15 % und bei 1 bis 8 %.
In weiter bevorzugten Ausführungsformen zu B sind das Phosphat und die Fe (II)- und/ oder Fe (III)- Kationen überwiegend als schwerlösliches Salz in der $SiO_2$- Schicht vorhanden.
In weiter bevorzugten Ausführungsformen zu B sind das Phosphat und die Zn (II)- Kationen überwiegend als schwerlösliches Salz auf der Aluminiumeffektpigmentoberfläche vorhanden. In diesem Fall ist mit eingeschlossen, dass die Aluminiumeffektpigmentoberfläche auch aus Aluminiumoxid und/ oder Aluminiumhydroxid und/ oder Aluminiumoxidhydrat mit einer durchschnittlichen Schichtdicken von 5 bis 20 nm, bevorzugt von 8 bis 15 nm besteht und das Phosphat und die Zn (II)- Kationen überwiegend in dieser Schicht und/ oder auf dieser Schicht vorhanden ist.
In weiter bevorzugten Ausführungsformen zu B sind das Phosphat überwiegend auf der Aluminiumeffektpigmentoberfläche und die Zn (II)- Kationen überwiegend in der $SiO_2$- Schicht vorhanden. Auch in diesem Fall ist mit eingeschlossen, dass die Aluminiumeffektpigmentoberfläche auch aus Aluminiumoxid und/ oder Aluminiumhydroxid und/ oder Aluminiumoxidhydrat mit einer durchschnittlichen Schichtdicken von 5 bis 20 nm, bevorzugt von 8 bis 15 nm besteht und das Phosphat überwiegend in dieser Schicht und/ oder auf dieser Schicht vorhanden ist.

Das unter Anwendung des erfindungsgemäßen Verfahrens beschichtete Metalleffektpigment, vorzugsweise Aluminiumeffektpigment, kann optional mit einer dem jeweiligen Anwendungszweck angepassten Oberflächenmodifizierung versehen werden. Beispielsweise kann diese Oberflächenmodifizierung Silane enthalten oder aus Silanen bestehen, die vorzugsweise auf die Siliciumoxidschicht, vorzugsweise $SiO_2$- Schicht, aufgebracht ist.

Beispiele für oberflächenmodifizierte Aluminiumeffektpigmente sind beispielsweise in DE 198 20 112 A1 ausführlich beschrieben, deren Inhalt hiermit unter Bezugnahme aufgenommen ist.

Die Metalleffektpigmente weisen einen mittleren Partikeldurchmesser auf, der vorzugsweise im Bereich von 1 $\mu$m bis 200 $\mu$m, weiter bevorzugt von 5 $\mu$m bis 150 $\mu$m liegt.

Die erfindungsgemäß verwendeten Metalleffektpigmente sind plättchenförmige Metallpigmente, die durch Vermahlung von Metallgrieß oder mittels PVD-Verfahren (PVD: physikalische Dampfabscheidung) erhalten werden können.

Bevorzugt handelt es sich bei den Metalleffektpigmenten um Aluminium- und/oder Kupfer- oder Messing(Goldbronze)effektpigmente und ganz besonders bevorzugt um Aluminiumeffektpigmente.

Die Aluminiumeffektpigmente können vom "Cornflake"- oder vom "Silberdollar"-Typ sein.

Besonders vorteilhaft ist die Verwendung von Aluminiumeffektpigmenten gemäß der Offenbarung der DE 103 157 15 A1 und DE 10 2006 062271, deren Inhalte hiermit unter Bezugnahme aufgenommen sind. Derartige auch als "Platindollar®" oder "Silvershine® S" bezeichnete Aluminiumeffektpigmente werden durch Nassvermahlung hergestellt und sind in ihren Pigmenteigenschaften wie mittlerer Dicke und Dickenverteilung nahezu vergleichbar mit PVD-Aluminiumeffektpigmenten.

Im Unterschied zu PVD-Aluminiumeffektpigmenten weisen diese durch Nassvermahlung erhaltenen "Platindollar"- oder "Silvershine"-Aluminiumeffektpigmente keine absolut ebene Oberfläche auf, wie dies bei PVD-Aluminiumeffektpigmenten der Fall ist. PVD-Aluminiumeffektpigmente weisen des Weiteren relativ gerade Bruchkanten auf, wohingegen die durch Nassvermahlung erhaltenen Aluminiumeffektpigmente einen irregulär geformten Randbereich aufweisen, der auch als ausgefranster Randbereich bezeichnet werden kann.

Besonders vorteilhaft sind Metalleffektpigmente, bevorzugt Aluminiumeffektpigmente, mit einer über Dickenauszählung mit Rasterelektronenmikroskopie ermittelten mittleren Dicke $h_{50}$ von 15 bis unter 100 nm und eine über Dickenauszählung mit Rasterelektronenmikroskopie ermittelten relativen Breite der Dickenverteilung $\Delta h$, welche anhand der entsprechenden Summenhäufigkeitskurve der relativen Häufigkeiten nach der Formel $\Delta = 100x\ (h_{90}-h_{10}) / h_{50}$ berechnet wird, von 30 % bis 140% einsetzbar, wie in DE10315715 A1 und DE 102006062271 offenbart. Die Summenhäufigkeitskurve wird auch als Summendurchgangskurve bezeichnet.

Eine weiterhin bevorzugte Ausführungsform betrifft PVD-Metalleffektpigmente, vorzugsweise PVD-Aluminiumeffektpigmente, die mit dem erfindungsgemäßen Verfahren unter Bereitstellung erfindungsgemäß beschichteter Metalleffektpigmente hergestellt werden können.

Die erfindungsgemäßen Metalleffektpigmente weisen eine außerordentliche Stabilität gegenüber Korrosion auf, so dass es nicht erforderlich ist, weitere Schutzschichten aufzubringen. Gemäß einer bevorzugten Variante der Erfindung weisen die erfindungsgemäßen Metalleffektpigmente keine weitere anorganische und/oder organische Schutzschicht auf. Eine Oberflächenmodifizierung wird nicht als organische Schutzschicht verstanden.

Gemäß einer weiteren bevorzugten Ausführungsform weisen die erfindungsgemäßen Metalleffektpigmente keine weitere Schicht auf, so dass die Siliciumschicht, vorzugsweise $SiO_2$- Schicht, die äußerste Schicht ist.

Ein weiterer Gegenstand der vorliegenden Erfindung ist eine Gesamtheit von erfindungsgemäß beschichteten Metalleffektpigmenten, welche mindestens drei Populationen von erfindungsgemäßen Metalleffektpigmenten umfasst, deren $d_{50}$-Werte des Durchmessers sich jeweils um 2 bis 6 μm unterscheiden, wobei der kleinste $d_{50}$-Wert eines Metalleffektpigments aus der Gesamtheit maximal 5 μm beträgt. Eine derartige Gesamtheit kann ein breites Spektrum unterschiedlicher optischer Eindrücke der Metalleffektpigmente hinsichtlich Glanz, Sparkle, Helligkeitsflop etc. erzeugen.

Bei einer weiter bevorzugten Ausführungsform umfasst die Gesamtheit mindestens vier Populationen von erfindungsgemäßen Metalleffektpigmenten, deren $d_{50}$-Werte des Durchmessers sich jeweils um 3 bis 5 μm unterscheiden, wobei der kleinste $d_{50}$-Wert eines Metalleffektpigments aus der Gesamtheit maximal 5 μm beträgt.

Selbstverständlich kann die Gesamtheit der erfindungsgemäß beschichteten Metalleffektpigmente noch mehr Populationen an erfindungsgemäßen Metalleffektpigmenten mit unterschiedlichen $d_{50}$-Werten sowie unterschiedlichen Breiten der Größenverteilungen umfassen, was von den Anforderungen eines gewünschten optischen Erscheinungsbildes abhängt.

Das erfindungsgemäße Verfahren zum Herstellen der erfindungsgemäßen Metalleffektpigmente umfasst folgende Schritte:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und Metallkationen zu den Metalleffektpigmenten vor oder während Schritt (a) unter Aufnahme von phosphor- und/oder schwefelhaltigen Anionen und Metallkationen auf die Metalleffektpigmentoberfläche und/oder in die Siliciumoxidschicht,
(c) optional Aufbringen einer Oberflächenmodifizierung auf die Siliciumoxidoberfläche.

Gemäß einer bevorzugten Variante der Erfindung umfasst das Verfahren zum Herstellen von mit Siliciumoxid beschichteten Metalleffektpigmenten folgende Schritte:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und Metallkationen zu den Metalleffektpigmenten vor oder während Schritt (a) unter überwiegender Aufnahme von phosphor- und/oder schwefelhaltigen Anionen und von Metallkationen in die Siliciumoxidschicht,
(c) optional Aufbringen einer Oberflächenmodifizierung auf die Siliciumoxidoberfläche.

Mit der vorstehenden Verfahrensvariante werden erfindungsgemäße Metalleffektpigmente bereitgestellt, bei denen die phosphor- und/oder schwefelhaltigen Anionen und Metallkationen überwiegend in der Siliciumoxidschicht, vorzugsweise $SiO_2$, vorliegen.

Gemäß einer weiteren bevorzugten Variante der Erfindung umfasst das Verfahren zum Herstellen von mit Siliciumoxid beschichteten Metalleffektpigmenten folgende Schritte:

(a) Zugabe von phosphor- und/oder schwefelhaltigen Anionen und Metallkationen zu den Metalleffektpigmenten unter überwiegender Aufnahme von phosphor- und/oder schwefelhaltigen Anionen und Metallkationen auf die Metalleffektpigmentoberfläche,
(b) Aufbringen von Siliciumoxid auf die gemäß Schritt (a) behandelten Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(c) optional Aufbringen einer Oberflächenmodifizierung auf die Siliciumoxidoberfläche.

Mit der vorstehenden Verfahrensvariante werden erfindungsgemäße Metalleffektpigmente bereitgestellt, bei denen die phosphor- und/oder schwefelhaltigen Anionen und Metallkationen überwiegend auf der Metalleffektpigmentoberfläche vorliegen.

Gemäß einer weiteren bevorzugten Variante der Erfindung umfasst das Verfahren zum Herstellen von mit Siliciumoxid beschichteten Metalleffektpigmenten folgende Schritte:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und/oder Metallkationen zu den Metalleffektpigmenten vor oder während Schritt (a) unter überwiegender Aufnahme von phosphor- und/oder schwefelhaltigen Anionen auf die Metalloberfläche und unter überwiegender Aufnahme von Metallkationen in die Siliciumoxidschicht,
(c) optional Aufbringen einer Oberflächenmodifizierung auf die Siliciumoxidoberfläche.

Mit der vorstehenden Verfahrensvariante werden erfindungsgemäße Metalleffektpigmente bereitgestellt, bei denen die phosphor- und/oder schwefelhaltigen Anionen überwiegend auf der Metalleffektpigmentoberfläche und die Metallkationen überwiegend in der Siliciumoxidschicht, vorzugsweise $SiO_2$, vorliegen.

Die Aufnahme der Metallkationen bzw. der phosphor- und/oder schwefelhaltigen Anionen auf die Metalleffektpigmentoberfläche und/oder in die Siliciumoxidschicht kann beispielsweise durch die Reihenfolge der Zugabe der Metallkationen bzw. der phosphor- und/oder schwefelhaltigen Anionen gesteuert werden. Optional kann auch die unterschiedliche Kinetik der jeweiligen chemischen Reaktionen, beispielsweise der Bildung eines schwerlöslichen Salzes, genutzt werden, um die Aufnahme der Metallkationen bzw. der phosphor- und/oder schwefelhaltigen Anionen auf die Metalleffektpigmentoberfläche und/oder in die Siliciumoxidschicht zu steuern.

Gemäß einer weiteren bevorzugten Variante der Erfindung umfasst das Verfahren zum Herstellen von mit Siliciumoxid beschichteten Metalleffektpigmenten folgende Schritte:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und/oder Metallkationen zu den Metalleffektpigmenten vor oder während Schritt (a) unter überwiegender Aufnahme von Metallkationen auf die Metalloberfläche und unter überwiegender Aufnahme von phosphor- und/oder schwefelhaltigen Anionen in die Siliciumoxidschicht,
(c) optional Aufbringen einer Oberflächenmodifizierung auf die Siliciumoxidoberfläche.

Mit der vorstehenden Verfahrensvariante werden erfindungsgemäße Metalleffektpigmente bereitgestellt, bei denen die Metallkationen überwiegend auf der Metalleffektpigmentoberfläche und die phosphor- und/oder schwefelhaltigen Anionen überwiegend in der Siliciumoxidschicht, vorzugsweise $SiO_2$, vorliegen.

Bei dem erfindungsgemäßen Verfahren werden Metalleffektpigmente mit Siliciumoxid beschichtet, wobei dieser Verfahrensabschnitt folgende Schritte umfasst:

a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
b) Zugabe von phosphor- und/oder schwefelhaltigen Anionen und Metallkationen zu den Metalleffektpigmenten vor oder während Schritt (a) unter Aufnahme von phosphor- und/oder schwefelhaltigen Anionen und Metallkationen in die Siliciumoxidschicht,
c) optional Aufbringen einer Oberflächenmodifizierung auf die Siliciumoxidoberfläche.

Das Verfahren nach Schritt (a) wird auch als Sol-Gel-Verfahren bezeichnet. Es kann unter Zugabe von Säure und/oder eine Base katalysiert werden.

Bei einer bevorzugten erfindungsgemäßen Variante dieses Verfahrensabschnitts wird die Umsetzung nach Schritt (a)

(i) in einem ersten Schritt unter Zugabe von Säure und in einem zweiten Schritt unter Zugabe von Base durchgeführt wird oder
(ii) die Umsetzung in einem ersten Schritt unter Zugabe von Base und in einem zweiten Schritt unter Zugabe von Säure durchgeführt wird.

Überraschenderweise wurden die verbesserte Gasungsstabilität sowie insbesondere die vorteilhaften Dekkungseigenschaften der erfindungsgemäßen Metalleffektpigmente mittels dieses zweistufigen Verfahrens zur Aufbringung von Siliciumoxid, vorzugsweise $SiO_2$, weiter verbessert.

Bei dem Siliciumoxid handelt es sich vorzugsweise um $SiO_2$.

Gemäß einer besonders bevorzugten Weiterbildung der Erfindung werden die phosphorhaltigen Anionen und die Metallkationen in getrennten Lösungen zu den zu behandelnden Metalleffektpigmenten, vorzugsweise unter Rühren, gegeben. Die zu behandelnden Metalleffektpigmente liegen vorzugsweise als Dispersion, bevorzugt in einem organischen oder wässrigen organischen Lösungsmittel, vor. Die Zugabe der phosphor- und/ oder schwefelhaltigen Anionen einerseits und der Metallkationen andererseits kann in getrennten Schritten gleichzeitig oder nacheinander erfolgen. Je nach bevorzugter Variante des erfindungsgemäßen Verfahrens werden zuerst die Lösung, die die phosphor- und/ oder

schwefelhaltigen Anionen enthält, und nachfolgend die Lösung, die die Metallkationen enthält, zu den Metalleffektpigmenten gegeben oder umgekehrt.

Die Metallkationen wie auch die phosphor- und/ oder schwefelhaltigen Anionen werden bevorzugt als leichtlösliche Salzverbindungen oder Säuren zugegeben. So können beispielsweise Fe (II)- Ionen als $FeSO_4$- Salze und Phosphate als Hydrogen- oder Dihdrogenphosphate des Natriums oder Kaliums zugegeben werden.

Es ist mithin erfindungsgemäß besonders bevorzugt, wenn die Metallkationen und die phosphor- und/oder schwefelhaltigen Anionen erst im Reaktionsgemisch schwerlösliche Salze bilden können.

Die Lösung mit den phosphor- und/oder schwefelhaltigen Anionen und die Lösung mit den Metallkationen kann auch portionsweise zu den Metalleffektpigmenten zugegeben werden. Bei einer abwechselnden Zugabe werden die Metalleffektpigmente vorzugsweise zuerst mit der Lösung, die die phosphorhaltigen Anionen enthält, in Kontakt gebracht.

Der Zeitpunkt des Beginns der Zugabe der Lösung mit den phosphor- und/ oder schwefelhaltigen Anionen und/ oder der Lösung mit den Metallkationen zum Reaktionsgemisch liegt vorzugsweise in einem Zeitraum, der von 1 Stunde vor dem Start der Sol- Gel- Reaktion bis 4 Stunden nach dem Start der Sol- Gel- Reaktion, die die Abscheidung von Siliciumoxid, vorzugsweise von $SiO_2$, auf der Metalleffektpigmentoberfläche bewirkt, reicht. Als Reaktionsstart wird der Zeitpunkt bezeichnet, bei dem alle wesentlichen Reaktionspartner der Sol- Gel- Reaktion (Metalleffektpigmente, Alkoxysilan, Wasser und Katalysator) im Reaktionsgemisch vorhanden sind und vorzugsweise die Temperatur erhöht ist.

Weiter bevorzugt liegt der Zeitpunkt des Beginns der Zugabe der Lösung mit den phosphor- und/oder schwefelhaltigen Anionen und/oder der Lösung mit den Metallkationen zum Reaktionsgemisch in einem Bereich von 30 min vor dem Start bis 3 h nach dem Start und besonders bevorzugt von 0,0 h bis 2 h nach Start der Sol-Gel-Reaktion.

Der Zeitpunkt der Zugabe der Metallkationen und/oder der phosphor- und/oder schwefelhaltigen Anionen wird auch wesentlich von der gewählten Verfahrensvariante beeinflusst.

Bei einer überwiegenden Aufnahme der Metallkationen und der phosphor- und/oder schwefelhaltigen Anionen in die Siliciumoxidschicht wird vorzugsweise zunächst die Sol-Gel-Reaktion zur Aufbringung der Siliciumoxidschicht gestartet und sodann die Metallkationen und die phosphor- und/oder schwefelhaltigen Anionen zugegeben.

Bei einer überwiegenden Aufnahme der Metallkationen und der phosphor- und/oder schwefelhaltigen Anionen auf die Metalleffektpigmentoberfläche werden vorzugsweise zunächst die Metallkationen und die phosphor- und/oder schwefelhaltigen Anionen zugegeben und sodann die Sol-Gel-Reaktion zur Aufbringung der Siliciumoxidschicht gestartet.

Bei einer überwiegenden Aufnahme der Metallkationen auf die Metalleffektpigmentoberfläche und einer überwiegenden Aufnahme der phosphor- und/oder schwefelhaltigen Anionen in die Siliciumoxidschicht werden vorzugsweise zunächst die Metallkationen zugegeben und nachfolgend die Sol-Gel-Reaktion zur Aufbringung der Siliciumoxidschicht gestartet und sodann die phosphor- und/oder schwefelhaltigen Anionen zugegeben.

Bei einer überwiegenden Aufnahme der phosphor- und/oder schwefelhaltigen Anionen auf die Metalleffektpigmentoberfläche und einer überwiegenden Aufnahme der Metallkationen in die Siliciumoxidschicht werden vorzugsweise zunächst die phosphor- und/oder schwefelhaltigen Anionen zugegeben und nachfolgend die Sol-Gel-Reaktion zur Aufbringung der Siliciumoxidschicht gestartet und sodann die Metallkationen zugegeben.

Wie bereits vorstehend ausgeführt kann die Aufnahme der Metallkationen bzw. der phosphor- und/oder schwefelhaltigen Anionen auf die Metalleffektpigmentoberfläche bzw. in die Siliciumoxidschicht auch über die unterschiedlichen Reaktionskinetiken beeinflusst werden.

Vorzugsweise wird mithin je nach Verfahrensvariante vor, während oder nach der Zugabe der Lösung (en) mit den phosphor- und/ oder schwefelhaltigen Anionen und/ oder der Lösung mit den Metallkationen die Siliciumoxidschicht, vorzugsweise $SiO_2$- Schicht, unter Hydrolyse von Alkoxysilan (en) und/ oder Siliciumhalogenid (en) aufgebracht.

Das/Die Alkoxysilan (e) und/ oder das/die Siliciumhalogenid (e) wird/ werden dabei in dem organischen Lösemittel oder Lösemittelgemisch durch das vorhandene und/ oder zugegebenes Wasser hydrolysiert. Durch die Hydrolyse werden auf den Siliciumatomen OH- Gruppen, die auch als Silanolgruppen bezeichnet werden, ausgebildet. Die Silanolgruppen kondensieren unter Wasserabspaltung und Ausbildung eines Si- O- Si- Netzwerkes. Dieses Si- O- Si-Netzwerk fällt dann in Form eines Sols/ Gels auf die Metalleffektpigmente auf, wodurch diese mit Siliciumoxid, vorzugsweise $SiO_2$, ummantelt oder eingekapselt werden.

Die Lösungen mit den phosphor- und/ oder schwefelhaltigen Anionen und die Lösung mit den Metallkationen werden, wie vorstehend ausgeführt, vor, während und/ oder nach dem Start der Sol- Gel- Reaktion zugegeben.

Als phosphorhaltige Anionen werden Phosphationen bevorzugt. Als schwefelhaltige Anionen werden Sulfationen bevorzugt.

Die Erfinder haben überraschend herausgefunden, dass insbesondere Metalleffektpigmente, die mit phosphor- und/oder schwefelhaltigen Anionen und mit Metallkationen, wie vorstehend erläutert, behandelt wurden sowie mit einem wenigstens zweistufigen Verfahren mit Siliciumoxid, vorzugsweise $SiO_2$, beschichtet wurden, verbesserte Anwendungseigenschaften aufweisen. Das zur Aufbringung von Siliciumoxid, vorzugsweise $SiO_2$, verwendete zweistufige Verfahren basiert hierbei auf unterschiedlichen Katalysatoren und umfasst einen sauer und einen basisch katalysierten Schritt.

Es ist bislang ist noch nicht klar, worauf dieser überraschende Effekt zurückzuführen ist. In Abhängigkeit vom

pH- Wert ändert sich das Verhältnis der Geschwindigkeit der Hydrolyse der Alkoxygruppe (n) der Alkoxysilane und/ oder der/des Halogenide (s) der Siliciumhalogenide zu Silanolgruppe (n) zur Geschwindigkeit der Kondensation der Silanolgruppen miteinander unter Ausbildung von Si- O- Si- Bindungen.

Bei einer bevorzugten Variante der Erfindung erfolgt die Hydrolyse der Alkoxygruppe(n) vorwiegend unter Zugabe von Säure(n). Bei dieser Verfahrensvariante liegt der pH-Wert vorzugsweise in einem Bereich von pH 3 bis 7, vorzugsweise von pH 4 bis 6,5. Ein pH-Wertbereich von pH 4,5 bis pH 6 ist auch sehr geeignet.

Gemäß einer bevorzugten Weiterbildung dieser Verfahrensvariante erfolgt die Kondensation der erzeugten Silanolgruppen zu Si- O- Si- Bindungen vorwiegend unter Zugabe von Base. Der pH- Wert liegt dabei vorzugsweise in einem pH- Wertebereich von mehr als pH 7 bis pH 11, weiter bevorzugt von pH 7, 5 bis pH 10. Als sehr geeignet hat sich auch ein pH im Bereich von pH 8 bis pH 9, 5 erwiesen.

Gemäß einer Variante der Erfindung kann auch ein kontinuierlicher pH-Gradient während der Beschichtung angelegt werden. Bevorzugt wird dabei der pH-Wert kontinuierlich von sauer nach basisch durch kontinuierliche Zugabe der entsprechenden Reagenzien geändert.

Bei einer weiter bevorzugten Ausführungsform erfolgt zwischen dem Schritt der Hydrolyse unter Zugabe von Säure(n) und dem Schritt der Kondensation unter Zugabe von Base(n) ein pH-Sprung. Die Differenz des pH-Wertes zwischen dem ersten und dem zweiten Schritt liegt vorzugsweise in einem Bereich von 0,3 bis 4 pH-Einheiten, weiter bevorzugt von 0,5 bis 3 pH-Einheiten und noch weiter bevorzugt von 0,7 bis 2 pH-Einheiten.

Bei dieser äußerst bevorzugten Ausführungsform des erfindungsgemäßen Verfahrens erfolgt die Umsetzung unter saurer Katalyse in einem ersten Schritt und unter basischer Katalyse in einem zweiten Schritt. Das Reaktionsschema (III) ist dabei wie folgt:

$$Met_{disp.} + Si(OR)_4 + 2\,H_2O \xrightarrow{\text{1. Säure}} \xrightarrow{\text{2. Base}} Met/SiO_2 + 4\,ROH \qquad \text{(III)}$$

Die Säure (n) bzw. Base (n) wirken jeweils katalytisch, indem die Reaktionsgeschwindigkeit der Hydrolyse zu Silanolgruppen und/ oder Kondensation der Silanolgruppen unter Ausbildung von Si- O- Si- Bindungen eines Siliciumoxidnetzwerks, vorzugsweise eines Siliciumdioxidnetzwerks, beeinflusst wird. Hierbei findet im ersten Schritt die Hydrolyse der Alkoxysilane zu Silanolen (IIIa) und im zweiten Schritt die Kondensation der Silanole (IIIb) kinetisch bevorzugt statt.

$$Si(OR)_4 + H_2O \xrightarrow[\text{- ROH}]{} HO\text{-}Si(OR)_3 \xrightarrow[\text{- ROH}]{+ H_2O} (HO)_2\text{-}Si(OR)_2 \longrightarrow \longrightarrow \quad \text{(IIIa)}$$

$$2\,HO\text{-}\,Si\,(OR)_3 \rightarrow (RO)_3\text{-}\,Si\text{-}\,O\text{-}\,Si\text{-}\,(OR)_3 + H_2O \qquad \text{(IIIb)}$$

Es ist von Sol-Gel-Prozessen bekannt, dass bei saurer Katalyse zunächst einmal lineare und/oder ringförmige und/oder leiterartige Siloxanoligomere entstehen, die einen nur geringen Silanolgruppenanteil aufweisen. Der Grund liegt in der abnehmenden Hydrolysegeschwindigkeit der oligomeren gegenüber der Hydrolysegeschwindigkeit der monomeren Alkoxysilane.

Bei der basischen Katalyse dagegen bilden sich bevorzugt dreidimensionale Siloxanoligomerstrukturen mit einem hohen Silanolgehalt aus. Hier liegen eine zunehmende Hydrolysegeschwindigkeit der Oligomere gegenüber der Hydrolysegeschwindigkeit der monomeren Alkoxysilane sowie eine hohe Kondensationsgeschwindigkeit vor.

Bei einer raschen Kondensation von Silanolgruppen unter Ausbildung von Si- O- Si- Bindungen werden Metalleffektpigmente mit einem kleinen Partikeldurchmesser nachteiligerweise zusammen mit dem sich rasch bildenden Siliciumoxid, üblicherweise $SiO_2$, auf der Oberfläche von Metalleffektpigmenten mit einem größeren Partikeldurchmesser aufgefällt bzw. abgeschieden. Die Metalleffektpigmente mit kleinerem Partikeldurchmesser werden mithin in der Siliciumoxidummantelung der Metalleffektpigmente mit größerem Partikeldurchmesser eingekapselt.

Hierdurch entstehen zugleich zwei Nachteile:

Für eine gute Deckkraft (Deckvermögen) , d.h. die pro Gewichtseinheit Pigment abgedeckte Substratfläche, ist der Anteil an Metalleffektpigmenten mit kleinem Partikeldurchmesser, der auch als Feinanteil bezeichnet wird, in einer Metalleffektpigmentpräparation wesentlich. Die Deckkraft wird auch als Opazität bezeichnet.

Ein Metalleffektpigment liegt üblicherweise in einer Teilchengrößenverteilung vor. Mit zunehmender Breite der Teilchengrößenverteilung nimmt die Deckkraft, d.h. die Opazität, des Metalleffektpigments zu. Der Feinanteil eines Metalleffektpigmentes, vorzugsweise Aluminiumeffektpigmentes, ist beispielsweise durch den $D_{10}$-Wert der Summen-

verteilung der Größenverteilungskurve charakterisiert. Die Größenverteilungskurve wird üblicherweise mittels Lasergranulometrie ermittelt.

Durch die Verringerung des Feinanteils einer Metalleffektpigmentpräparation durch Auffällen desselben zusammen mit dem sich bildenden Siliciumoxid auf die Metalleffektpigmente mit größerem Partikeldurchmesser wird die Deckkraft bzw. die Opazität der siliciumoxidbeschichteten Metalleffektpigmentpräparation verringert.

Der zweite Nachteil ist, dass der metallische Glanz der mit Siliciumoxid beschichteten Metalleffektpigmentpräparation verringert wird. Aufgrund der Auffällung des Feinanteils auf die Metalleffektpigmente mit größerem Pigmentdurchmesser wird einfallendes Licht allein schon aufgrund des erhöhten Kantenanteils stärker gestreut. Dieser Effekt wirkt sich insbesondere beeinträchtigend auf den Glanz der Metalleffektpigmente aus.

Bei dieser ersten Variante des erfindungsgemäßen Verfahrens kommt es, vermutlich aufgrund der langsamen Erzeugung der Silanolgruppen zu einer langsamen Auffällung von Siliciumoxid auf die Metalleffektpigmente. Vermutlich werden im Hinblick auf die langsamere Auffällung des Siliciumoxids der Feinanteil der Metalleffektpigmentpräparation nicht "mitgerissen", sondern separat mit Siliciumoxid beschichtet, weshalb die Deckkraft und der metallische Glanz nicht beeinträchtigt werden.

Bei dem zweiten Verfahrensschritt wird, nachdem die Metalleffektpigmente mit einer ersten Schicht aus Siliciumoxid, vorzugsweise $SiO_2$, beschichtet sind, nachfolgend unter Zugabe von Base eine zweite Schicht aus Siliciumoxid, vorzugsweise $SiO_2$, aufgebracht.

Überraschenderweise kommt es nach der Zugabe von Base in dem zweiten Schritt nicht zu einer wesentlichen, vorzugsweise zu keiner, Agglomeration von Metalleffektpigmenten mit kleinem Partikeldurchmesser auf oder an Metalleffektpigmenten mit größerem Partikeldurchmesser. Es wird vermutet, dass dieser Effekt auf die Belegung der Metalleffektpigmentoberfläche mit der ersten Siliciumoxidbeschichtung zurückzuführen ist.

Überraschend ist ferner, dass bei dem erfindungsgemäß verwendeten zweistufigen Verfahren zur Aufbringung von Siliciumoxid, dass auch als Sol-Gel-Verfahren bezeichnet werden kann, Metalleffektpigmente mit den gleichen Mengen an Siliciumoxid, vorzugsweise $SiO_2$, beschichtet werden, wie bei einem üblicherweise im Stand der Technik verwendeten rein basischen Prozess, obgleich die Umsetzung in einer sauren oder angesäuerten Reaktionslösung beginnt und, vorzugsweise über einen pH-Gradienten, in einem weniger sauren, neutralen oder basischen Bereich endet.

Dies gilt insbesondere im Hinblick darauf, dass dem Stand der Technik zu entnehmen ist, dass die Auffällung von Siliziumdioxid auf eine Aluminiumeffektpigmentoberfläche unter Katalyse mit einer Base zu einer besseren Schichtbildung und einer besseren Ausbeute führt (z. B. EP 1 619 222 A1, EP 1 953 195 A1), weshalb im Stand der Technik grundsätzlich ein basischer Katalysator verwendet wird (A. Kiehl, K. Greiwe, Progr. in org. Coatings 37 (1999), 179 - 183).

Überraschenderweise kann erfindungsgemäß in einem pH-Bereich von pH 4 bis 7 gearbeitet werden, der im Stand der Technik, wie beispielsweise in EP 1 953 195 A1 beschrieben, bei Durchführung eines ausschließlich im sauren pH-Wert-Bereich durchgeführten Prozesses explizit ausgeschlossen wurde.

Überraschend wurde mithin gefunden, dass die erfindungsgemäß mit dem zweitstufigen Sol-Gel-Verfahren mit Siliciumoxid, vorzugsweise $SiO_2$, beschichteten Metalleffektpigmente eine gegenüber mit herkömmlichem Sol-Gel-Verfahren mit Siliciumoxid beschichteten Metalleffektpigmenten verbesserte Deckkraft aufweisen.

Bei der zweiten Verfahrensvariante, erfolgt gemäß Reaktionsschema (IV) in einem ersten Schritt die basische Katalyse und anschließend in einem zweiten Schritt die saure Katalyse:

$$Met_{disp.} + Si(OR)_4 + 2\,H_2O \xrightarrow{\text{Base}} \xrightarrow{\text{Säure}} Met/SiO_2 + 4\,ROH \qquad (IV)$$

Überraschend führt auch diese Verfahrensroute zu einer verbesserten Deckkraft der erfindungsgemäßen Metalleffektpigmente.

Bei einer bevorzugten Ausführungsform wird nach Zugabe des basischen Katalysators der im zweiten Schritt verwendete saure Katalysator rasch zugegeben. Hierunter wird, bezogen auf den Zeitpunkt der Zugabe des basischen Katalysators, vorzugsweise ein Zeitraum von 15 min bis 4 h, bevorzugt 20 min bis 2,5 h und weiter bevorzugt 30 min bis 1,5 h verstanden. Der pH-Wert kann bei einer Ausführungsform der zweiten Verfahrensvariante kontinuierlich von basisch nach sauer durch Zugabe von Säure geändert werden. Bei einer weiteren bevorzugten Ausführungsform der zweiten Verfahrensvariante erfolgt durch die Zugabe von Säure ein pH-Sprung. Die Differenz des pH-Wertes zwischen dem ersten und dem zweiten Schritt liegt vorzugsweise in einem Bereich von 0,3 bis 4 pH-Einheiten, weiter bevorzugt von 0,5 bis 3 pH-Einheiten und noch weiter bevorzugt von 0,7 bis 2 pH-Einheiten.

Für beide Verfahrensvarianten werden prinzipiell die gleichen Säuren und/oder Basen als Katalysatoren verwendet.

Als Säuren können organische und/oder anorganische Säuren verwendet werden. Besonders bevorzugt sind organische Säuren.

Die erfindungsgemäß als saurer Katalysator eingesetzte(n) organische(n) Säure(n) enthält bevorzugt 1 bis 8

C-Atome, besonders bevorzugt 1 bis 6 C-Atome und ganz besonders bevorzugt 1 bis 4 C-Atome.
Bei dem organischen Rest dieser Säuren kann es sich um lineare, cyclische oder verzweigte Alkyl-, Alkenyl-, Aryl-, Aralkylreste handeln.

Die Säuren können einbasige, zweibasige oder dreibasige Säuren sein, wobei ein-oder zweibasige Säuren besonders bevorzugt sind.

Oberhalb von 8 C-Atomen ist im Allgemeinen die Säurestärke zu gering und die sterische Abschirmung zu hoch, um als wirksamer Katalysator verwendet werden zu können.

Gemäß einer bevorzugten Variante wird die als saurer Katalysator eingesetzte organische Säure aus der Gruppe, die aus Ameisensäure, Essigsäure, Propionsäure, Oxalsäure, Malonsäure, Maleinsäure, Bernsteinsäure, Anhydriden der genannten Säuren und Mischungen davon besteht, ausgewählt. Ganz besonders bevorzugt werden Ameisensäure, Essigsäure oder Oxalsäure sowie deren Mischungen verwendet.

Gemäß einer weiteren Variante der Erfindung wird die erfindungsgemäß als saurer Katalysator eingesetzte anorganische Säure bevorzugt aus der Gruppe, die aus Salpetersäure, Schwefelsäure, Phosphorsäure, Salzsäure, Borsäure, Flusssäure und deren Mischungen besteht, ausgewählt. Bevorzugt wird hierbei Salpetersäure und/oder Flusssäure verwendet.

Die Verwendung von Phosphorsäure und/oder Schwefelsäure stellt eine bevorzugte Ausführungsform dar, da hierbei zugleich die bevorzugten Anionen, Phosphat und/oder Sulfat, bereitgestellt werden.

Bevorzugt ist der basische Katalysator eine organische Base und besonders bevorzugt ein Amin. Hierbei kann es sich um primäre, sekundäre oder tertiäre Amine handeln.

Bei einer weiter bevorzugten Ausführungsform weist das Amin 1 bis 8, besonders bevorzugt 1 bis 6, und ganz besonders bevorzugt 1 bis 5 C-Atome auf.
Amine mit mehr als 8 C-Atomen sind sterisch oft zu anspruchsvoll, um als wirksame Katalysatoren eingesetzt werden zu können.

Gemäß einer bevorzugten Variante der Erfindung wird das Amin aus der Gruppe, die aus Dimethylethanolamin (DMEA), Monoethanolamin, Diethanolamin, Triethanolamin, Ethylendiamin (EDA), t-Butylamin, Monomethylamin, Dimethylamin, Trimethylamin, Monoethylamin, Diethylamin, Triethylamin, Pyridin, Pyridinderivat, Anilin, Anilinderivat, Cholin, Cholinderivat, Harnstoff, Harnstoffderivat, Hydrazinderivat und Mischungen davon besteht, ausgewählt.

Besonders bevorzugt werden als basischer aminischer Katalysator Ethylendiamin, Monoethylamin, Diethylamin, Monomethylamin, Dimethylamin, Trimethylamin, Triethylamin oder Mischungen davon verwendet.

Weiterhin bevorzugt ist als basischer Katalysator ein Aminosilan, das vorzugsweise aus der Gruppe, die aus 3- Aminopropyl- triethoxysilan (AMEO) , 3- Aminopropyl- trimethoxysilan (AMMO) , N- 2- Aminoethyl- 3- aminopropyltriethoxysilan (DAMEO) , N- 2- Aminoethyl- 3- aminopropyl- triemthoxysilan (DAMO) , N- 2- Aminoethyl- 3- aminomethylpropyl- triethoxysilan, Triamino- funktionelles Trimethoxysilan (Silquest A- 1130) , Bis- (gamma- trimethoxysilylpropyl) amin (Silquest A- 1170) , N- Ethyl- gammaaminoisobutyltrimethoxysilan (Silquest A- Link 15) , N- Phenyl- gammaaminopropyltrimethoxysilan (Silquest Y- 9669) , 4- Amino- 3, 3- dimethylbutyltrimethoxysilan (Silquest Y- 11637) , N-Cyclohexylaminomethylmethyldiethoxysilan (GENIOSIL XL 924) , (N- Cyclohexylaminomethyl) triethoxysilan (GENIOSIL XL 926) , (N- Phenylaminomethyl) trimethoxysilan (GENIOSIL XL 973) und Mischungen davon besteht, ausgewählt wird.

Besonders bevorzugt werden als basischer Katalysator 3- Aminopropyl- triethoxysilan (AMEO) , 3- Aminopropyl- trimethoxysilan (AMMO) , N- 2- Aminoethyl- 3- aminopropyl- triethoxysilan (DAMEO) , N- 2- Aminoethyl- 3- aminopropyl- triemthoxysilan (DAMO) oder Mischungen davon verwendet.

Selbstverständlich kann als basischer Katalysator auch eine Mischung aus mindestens einem Amin und mindestens einem Aminosilan eingesetzt werden.

Vorzugsweise wird die anorganische Base aus der Gruppe, die aus Ammoniak, Hydrazin, Natriumhydroxid, Kaliumhydroxid, Ammoniumhydroxid, Ammoniumcarbonat, Ammoniumhydrogencarbonat, Natriumcarbonat, Natriumhydrogencarbonat, Kaliumcarbonat, Kaliumhydrogencarbonat und Mischungen davon besteht, ausgewählt.

Besonders bevorzugt wird hierbei Ammoniak und/oder Hydrazin und ganz besonders bevorzugt Ammoniak verwendet.

Bei dem Siliciumoxid handelt es sich vorzugsweise um $SiO_2$ Durch Sol-Gel-Verfahren hergestelltes $SiO_2$ ist bekanntlich amorph. Es weist einen nicht unerheblichen Anteil an gebundenem Wasser auf. Dieses Wasser kann in das $SiO_2$ eingelagert sein. Weiterhin kann das Siliciumoxid einen Anteil an nicht hydrolysierten Alkoxygruppen aufweisen.

Zur Herstellung von Siliciumoxid, vorzugsweise $SiO_2$, werden bevorzugt Alkoxysilane eingesetzt.

Bei dem erfindungsgemäß verwendeten Alkoxysilan handelt es sich vorzugsweise um Di-, Tri- und/ oder Tetraalkoxysilane. Äußerst bevorzugt ist Tetraalkoxysilan. Bei Verwendung von Tetraalkoxysilan werden nach der Hydrolyse vier Silanolgruppen ausgebildet, die unter Kondensation einen hohen Vernetzungsgrad erzeugen, mithin eine Siliciumoxidbeschichtung, vorzugsweise $SiO_2$- Beschichtung, mit guter Barrierewirkung erzeugen. Bei Verwendung von Di- oder Trialkoxysilanen werden nach Hydrolyse entsprechend zwei oder drei Silanolgruppen ausgebildet, die unter Ausbildung eines Si- O- Si- Netzwerkes kondensieren können. Die Verwendung von Di- oder Trialkoxysilanen erlaubt die Einbringung von organischen Gruppen, beispielsweise von Alkylgruppen oder Polymeren, in die Siliciumoxidbeschichtung unter Ausbildung einer anorganisch- organischen Mischschicht. Die Di- oder Trialkoxysilane können auch als Organosiloxane bezeichnet werden.

Erfindungsgemäß wird unter Alkoxysilan jede monomere oder polymere Siliciumverbindung mit wenigstens einer Alkoxygruppe verstanden. Vorteilhaft finden als Tetraalkoxysilan Tetramethoxysilan, Tetraethoxysilan, Tetraisopropoxysilan und Kondensate daraus oder deren Mischungen Verwendung.

Besonders vorteilhaft wird als Tetraalkoxysilan das Tetraethoxysilan und/oder Oligomere des Tetraethoxysilans eingesetzt.

Bei Verwendung von Alkoxysilan (en) , vorzugsweise Tetraalkoxysilan (en) , besteht der große Vorteil, dass hier keine Salze entstehen. Dies ist sowohl in ökologischer Hinsicht vorteilhaft als auch im Hinblick auf mögliche Agglomerationsprozesse während der Sol- Gel- Reaktion, da Salze die elektrostatische Stabilisierung der Pigmentteilchen stören.

Ein weiterer Vorteil besteht darin, dass im Gegensatz zur Verwendung von Siliciumhalogeniden keine Halogenide wie beispielsweise Chloridionen freigesetzt werden. Halogenidionen können bekanntlich die Korrosion von Metallen befördern.

Bei dem erfindungsgemäß verwendeten Siliciumhalogenid handelt es sich vorzugsweise um Di-, Tri- und/oder Tetrasiliciumhalogenide. Äußerst bevorzugt ist Siliciumtetrahalogenid. Die vorstehenden Ausführungen zu Di-, Tri- und/ oder Tetraalkoxysilanen gelten entsprechend.

Erfindungsgemäß wird unter Siliciumhalogenid jede monomere oder polymere Siliciumverbindung mit wenigstens einer Halogenidgruppe verstanden.

Als Siliciumhalogenide werden bevorzugt Tetrasiliciumhalogenide verwendet. Als Tetrasiliciumhalogenide werden vorzugsweise Tetrasiliciumfluorid, Tetrasiliciumchlorid, Tetrasiliciumbromid, Tetrasiliciumiodid oder deren Mischungen oder Mischhalogenide dieser Verbindungen verwendet.

Die Metalleffektpigmente werden zur Beschichtung mit Siliciumoxid, vorzugsweise $SiO_2$, in dem organischen Lösungsmittel unter Rühren dispergiert, das Reaktionsgemisch vorzugsweise auf erhöhte Temperatur gebracht und vorzugsweise Wasser hinzugegeben. Anschließend wird der erste Katalysator, d.h., je nach Verfahrensvariante Säure oder Base, sowie vorzugsweise Alkoxysilan hinzugegeben und nach einer ersten Reaktionszeit der zweite Katalysator, d.h. je nach Verfahrensvariante Base oder Säure, hinzugegeben. Das Gemisch wird eine zweite Reaktionszeit lang unter diesen Bedingungen belassen. Dann kann optional eine Zugabe von Oberflächenmodifizierungsmitteln erfolgen. Das Gemisch wird vorzugsweise auf Raumtemperatur abgekühlt und die beschichteten Metalleffektpigmente weitgehend vom Lösemittel unter Bildung eines Metalleffektpigmentfilterkuchens getrennt.

Ein wesentlicher Nachteil der herkömmlich angewandten basischen Sol-Gel-Beschichtung eines Metalleffektpigments ist die fehlende bzw. unzureichende Ausgewogenheit der Anwendungseigenschaften der so erhaltenen beschichteten Metalleffektpigmente, insbesondere hinsichtlich Deckvermögen und Korrosionsstabilität, in einem Anwendungsmedium, wie beispielsweise in einem pigmentierten Wasserlack.

Bekanntlich führt eine ungenügende Korrosionsstabilität eines Metalleffektpigmentes, insbesondere eines Aluminiumeffektpigments, in einem wässrigen Anwendungsmedium zur Reaktion mit dem Wasser unter Wasserstoffentwicklung und Auflösung des Metalleffektpigmentes. Bereits durch eine leichte Korrosion werden die optischen Eigenschaften, insbesondere der Spiegelglanz, beeinträchtigt.

Unter der Deckkraft oder dem Deckvermögen eines pigmentierten Mediums versteht man die Fähigkeit des pigmentierten Mediums, die Farbe oder die Farbunterschiede eines Untergrundes zu verdecken (DIN 55987).

Für das optische Erscheinungsbild eines Metalleffektpigmentes, insbesondere eines Aluminiumeffektpigmentes, sind dessen Teilchengröße und deren Verteilung, die sogenannte Teilchengrößenverteilung, ein wichtiges optisches Beurteilungskriterium für pigmentierte Applikationen.

Das das optische Erscheinungsbild einer Metalleffektpigmentpräparation, insbesondere einer Aluminiumeffektpigmentpräparation, charakterisierende Deckvermögen (bzw. die Deckkraft), auch als Opazität bezeichnet, nimmt mit zunehmender Breite der Teilchengrößenverteilung zu, da dann zunehmend mehr Feinanteil enthalten ist. Das Deckvermögen bzw. die Deckkraft nimmt generell mit zunehmender Metalleffektpigmentfeinheit in der Metalleffektpigmentpräparation zu.

Die Metalleffektpigmente weisen vorzugsweise eine Teilchengrößenverteilung mit einem $D_{50}$-Wert von 2 bis 75 $\mu$m, weiter bevorzugt von 2 bis 30 $\mu$m, und besonders bevorzugt von 2,5 bis 20 $\mu$m und ganz besonders bevorzugt von 2,5 bis 12 $\mu$m auf.

Je feiner die Metalleffektpigmente sind, desto größer ist bei den herkömmlichen Produkten der Verlust der Deckkraft im Vergleich zum unbeschichteten Ausgangsmaterial. Die erfindungsgemäßen Metalleffektpigmente weisen überraschenderweise insbesondere bei diesen relativ feinen Pigmenten die Verbesserung der Deckkraft auf.

Vorzugsweise wird das als Ausgangspigment bei dem erfindungsgemäßen Verfahren eingesetzte Metalleffektpigment in ein Alkoxysilan, vorzugsweise Tetraalkoxysilan, enthaltendes Lösemittelgemisch aus oder mit organischem Lösemittel und optional Wasser dispergiert. Die Zugabe des sauren Katalysators, vorzugsweise organische oder anorganische Säure(n), erfolgt bevorzugt nach der Dispergierung des Metalleffektpigments im organischen Lösemittel

und optionalem Erwärmen der Dispersion auf Reaktionstemperatur. Das zur Hydrolyse benötigte Wasser kann bereits in dem organischen Lösemittel enthalten sein oder zu einem späteren Zeitpunkt zugegeben werden.

In das Reaktionsgemisch, das Metalleffektpigmente, Alkoxysilane, vorzugsweise Tetraalkoxysilane, Wasser und Säure(n) enthält, wird/werden sodann organische oder anorganische Base(n) als basischer Katalysator eingebracht, um die zweite Stufe des erfindungsgemäßen Verfahrens zu starten.

Als organische Lösemittel werden bevorzugt Alkohole, Glykole, Ester, Ketone sowie Mischungen dieser Lösemittel verwendet. Besonders bevorzugt ist die Verwendung von Alkoholen oder Glykolen oder deren Mischungen und ganz besonders bevorzugt ist die Verwendung von Alkoholen.

Als Alkohol finden vorteilhaft Methanol, Ethanol, Isopropanol, N-Propanol, T-Butanol, N-Butanol, Isobutylalkohol, Pentanol, Hexanol oder deren Mischungen, Verwendung.

Besonders bevorzugt werden Ethanol und/oder Isopropanol verwendet.

Als Glykol findet vorteilhaft Butylglykol, Propylglykol, Ethylenglykol oder Mischungen davon Verwendung.

Das vorliegende Reaktionsgemisch wird zur Beschichtung mit Siliciumoxid, vorzugsweise $SiO_2$, bevorzugt bei einer Temperatur, die in einem Bereich von 20°C bis zum Siedepunkt des jeweiligen Lösemittels oder Lösemittelgemisches liegt, zur Reaktion gebracht. Besonders bevorzugt liegt die Reaktionstemperatur in einem Bereich von 50°C bis zu einer Temperatur, die vorzugsweise 5°C unterhalb des Siedepunkts des jeweiligen Lösemittels oder Lösemittelgemisches, liegt. Ein bevorzugter Reaktionstemperaturbereich ist bei der Beschichtung mit Siliciumoxid, vorzugsweise, $SiO_2$, der von 75°C bis 82°C reichende Temperaturbereich.

Die Reaktionsdauer, für die erste und/oder zweite Stufe der Beschichtung mit Siliciumoxid, vorzugsweise $SiO_2$, bei dem erfindungsgemäßen Verfahren, liegt bevorzugt jeweils in einem Bereich, der 2 bis 20 h, besonders bevorzugt 3 bis 8 Stunden.

Das erfindungsgemäß beschichtete und optional oberflächenmodifizierte Metalleffektpigment, vorzugsweise Aluminiumeffektpigment, wird aus dem Reaktionsgemisch abgetrennt und kann sodann seiner bestimmungsgemäßen Verwendung zugeführt werden. Beispielsweise kann das erfindungsgemäße Metalleffektpigment als Pulver oder Paste weiterverarbeitet werden und danach in Farben, Druckfarben, Lacke, Kunststoffe, Kosmetika, etc. eingebracht werden.

Ein weiterer Gegenstand dieser Erfindung ist ferner ein erfindungsgemäßes Metalleffektpigment, welches als Pulver, Trockenpräparat oder Paste vorliegt und sich dadurch auszeichnet, dass in und/ oder auf der Siliciumoxidschicht, vorzugsweise $SiO_2$- Schicht, und/ oder im Lösemittel der Paste 0, 01- 1 Gew.- % organische und/ oder anorganische Säure und 0, 01- 1 Gew.- % organische und/ oder anorganische Base vorliegt, wobei sich die Gew.- % Angaben auf das Gesamtgewicht des Pigments beziehen.

Das erfindungsgemäße Trockenpräparat kann beispielsweise als Granulat, Pellets, Würstchen, Tabletten, Briketts, etc. vorliegen. Das Trockenpräparat kann als staubarme oder staubfreie Metalleffektpigmentpräparation vorliegen. Die Restfeuchte kann dabei in einem Bereich von 0,5 bis zu 29 Gew.-%, vorzugsweise bis 1 zu 24 Gew.-%, weiter bevorzugt von 3 bis zu 14 Gew.-%, noch weiter bevorzugt von 4 bis zu 9 Gew.-%, betragen, wobei sich diese Angaben jeweils auf das Gesamtgewicht des Trockenpräparates beziehen. Das Trockenpräparat enthält vorzugsweise noch Bindemittel, in der Regel organische(s) Polymer(e) und/oder Harz(e), sowie optional Additiv(e). Der Gehalt an Bindemittel in dem Trockenpräparat liegt vorzugsweise in einem Bereich von 0,5 bis 20 Gew.-% und besonders bevorzugt von 1 bis 5 Gew.-%, jeweils bezogen auf das Gesamtgewicht des Trockenpräparates.

Die Säuren und/oder Basen können dabei zumindest teilweise in ionischer Form, z.B. als ein Salz vorliegen. Die Basen können auch zumindest teilweise in Form eines Salzes mit den sauren Silanolgruppen (Si-OH) vorliegen.

Diese Merkmale sind zwingende Folge des zweistufigen Verfahrens zur Aufbringung von Siliciumoxid, vorzugsweise $SiO_2$. Besonders bevorzugt betragen die Konzentrationen der organischen und/ oder anorganischen Säure und der organischen und/ oder anorganischen Base unabhängig voneinander 0, 015- 0, 5 Gew.- % und ganz besonders bevorzugt 0, 015- 0, 2 Gew.- %, bezogen auf das Gesamtgewicht des Pigments. Aufgrund des zweistufigen Verfahrens zur Aufbringung von Siliciumoxid finden sich in und/ oder auf der Siliciumoxidschicht, vorzugsweise $SiO_2$- Schicht, sowohl Säure und/ oder Säureanionen als auch Basen. Bei diesen Komponenten handelt es sich um in der Siliciumoxidschicht, vorzugsweise $SiO_2$- Schicht, eingeschlossene und/ oder adsorbierte Katalysatorrückstände.

Bevorzugt befinden sich die Säuren und Basen überwiegend in der Siliciumoxidschicht, vorzugsweise $SiO_2$-Schicht.

Wenn das erfindungsgemäße Metalleffektpigment als Paste vorliegt, können die Säuren und/ oder Basen auch weitgehend im Lösemittel dieser Paste vorliegen. So kann das Lösemittel der Paste auch die Säuren und/ oder Basen, die zunächst überwiegend in der Siliciumoxidschicht, vorzugsweise $SiO_2$- Schicht, vorliegen, aus dieser herauslösen. Dies kann insbesondere nach einer gewissen Lagerzeit des erfindungsgemäßen Metalleffektpigments der Fall sein, wobei es nachfolgend zu einer oberflächlichen Adsorption der Säure und/ oder Base an die Siliciumoxidschicht, vorzugsweise $SiO_2$- Schicht, kommen kann.

Unter Paste wird im Rahmen dieser Erfindung eine Mischung enthaltend das erfindungsgemäße Metalleffektpigment und ein Lösemittel verstanden, wobei der Gehalt an Metalleffektpigment vorzugsweise 5 bis 80 Gew.-% und der Gehalt an Metalleffektpigment und dem Lösemittel vorzugsweise mindestens 95 Gew.-% bezogen auf die Paste,

beträgt.

In Abhängigkeit von der Beschaffenheit, insbesondere von der spezifischen Oberfläche sowie der Oberflächeneigenschaften, des erfindungsgemäßen Metalleffektpigmentes und gegebenenfalls von der Art des Lösemittels kann die Präparation als Trockenpräparation oder als Paste vorliegen.

Der Gehalt an Metalleffektpigment in der Paste hängt stark von seiner spezifischen Oberfläche ab. Will man sehr dünne Metalleffektpigmente mit mittleren Dicken unter 100 nm, wie beispielsweise PVD-Pigmente, in eine pastöse Form bringen, so ist hierzu ein sehr hoher Lösemittelanteil nötig. Demzufolge beträgt der Gehalt derartiger Pigmente bevorzugt 5 bis 30 Gew.-% und besonders bevorzugt 10 bis 20 Gew.-%, bezogen auf das Gesamtgewicht der Paste.

Derartige Pasten sind stets als Vorprodukt für die spätere Anwendung des Metalleffektpigments zu betrachten.

Für dickere Metalleffektpigmente mit mittleren Dicken > 100 nm sind im allgemeinen Metallpigmentgehalte von über 20 bis 80 Gew.-%, bevorzugt 30 bis 75 Gew.-% und besonders bevorzugt 50 bis 70 Gew.-%, jeweils bezogen auf das Gesamtgewicht der Paste, ausreichend.

Die Paste kann noch weitere Bestandteile wie beispielsweise Additive enthalten. Der Anteil weiterer Komponenten ist jedoch gering, da es sich hier nicht um eine Endanwendung (Formulierung) handelt. Mithin liegt der Gehalt an Metalleffektpigment und dem Lösemittel in der Paste bevorzugt bei mindestens 97 Gew.-% und besonders bevorzugt bei mindestens 98 Gew.-%, jeweils bezogen auf das Gesamtgewicht der Paste.

Als Lösemittel enthält die Paste bevorzugt in der Lack- und Druckfarbenindustrie geläufige Lösemittel. Da der Hauptverwendungszweck der erfindungsgemäßen Metalleffektpigmente wasserbasierende Lacke oder Druckfarben sind, sind Pasten besonders bevorzugt, bei denen das Lösemittel Wasser enthält oder daraus besteht. Der Wasseranteil der erfindungsgemäßen Paste beträgt bevorzugt 20 bis 100 Gew.-%, weiter bevorzugt 30 bis 90 Gew.-% und besonders bevorzugt 40 bis 80 Gew.-%, bezogen auf das Gewicht des Lösemittels in der Paste. Derartige Pasten sind aufgrund ihres niedrigen VOC-Anteils aus ökologischen Gründen besonders bevorzugt.

Die in der Siliciumoxidschicht, vorzugsweise $SiO_2$- Schicht, enthaltenen Rückstände an Säure und Base betragen in der Regel nicht mehr als jeweils 1 Gew.- %. Dies ist darauf zurückzuführen, dass die Reaktion, wie oben beschrieben, in einem Gemisch aus organischem Lösemittel und Wasser erfolgt. In diesem Lösemittelgemisch wird in der Regel der größte Anteil der als Säure und/ oder Base eingesetzten Katalysatoren gelöst. Der im Pigment eingeschlossene Anteil an Katalysator entspricht daher nur einem kleinen Anteil des insgesamt eingesetzten Katalysators.

Unter der organischen Säure bzw. deren Anionen werden keine langkettigen Fettsäuren, d.h. gesättigte oder ungesättigte Fettsäuren mit 12 bis 30 C- Atome oder mit 14 bis 22 C- Atomen verstanden. Derartige Fettsäuren werden als Schmiermittel bei der Vermahlung von Metallpigmenten eingesetzt. Damit enthält herstellungsbedingt jedes durch Vermahlung hergestellte Metalleffektpigment diese Fettsäuren. Während der Beschichtung mit Siliciumoxid, vorzugsweise $SiO_2$, werden die an der Metalloberfläche gebundenen Fettsäuren weitgehend abgelöst. Sie können jedoch in gewissen Teilen in die Siliciumoxidschicht, vorzugsweise $SiO_2$- Schicht, eingebaut werden oder nach Abschluss der Beschichtung an der Pigmentoberfläche adsorbieren.

Diese langkettigen Fettsäuren werden jedoch aufgrund ihrer geringen Säurestärke und aufgrund der hohen sterischen Abschirmung nicht als Katalysatoren bei Sol- Gel- Verfahren zur Herstellung von Siliciumoxidschichten, vorzugsweise $SiO_2$- Schichten, eingesetzt.

Somit werden erfindungsgemäß unter den Säuren und Basen, die in und/ oder auf der Siliciumoxidschicht, vorzugsweise $SiO_2$- Schicht, in den angegebenen Mengenverhältnissen vorhanden sind, nur diejenigen verstanden, die bei Sol- Gel- Verfahren als Katalysator bei der Abscheidung von Siliciumoxid verwendet werden.

Als Säuren oder Basen sind jene Verbindungen bevorzugt, die oben stehend bereits genannt wurden.

Im Fall der Aminosilane als basischer Katalysator ist zu beachten, dass diese gewöhnlicherweise auch als Oberflächenmodifizierungsmittel verwendet werden, um ein gute Anbindung des Metalleffektpigments an das Bindemittel zu ermöglichen. Hierfür werden jedoch gewöhnlicherweise Mengen von mindestens 1 Gew.-% bezogen auf das Metalleffektpigment eingesetzt.

Der analytische Nachweis der Basen und/oder Säuren erfolgt bevorzugt mittels Gaschromatographie und Massenspektroskopie. Hierbei wird in bevorzugter Weise das beschichtete Metalleffektpigment in geeignetem organischen Lösemittel aufgenommen, mindestens 15 min lang im Ultraschallbad bei Raumtemperatur oder leicht erhöhter Temperatur behandelt und beispielsweise mit Hexadecan als internem Standard versetzt. Der Feststoff wird abzentrifugiert und die überstehende Lösung als Injektionslösung für den Gaschromatographen verwendet. Gegebenenfalls kann die überstehende Lösung auch in geeigneter Weise eingeengt werden, falls die Konzentration der zu detektierenden Säure oder Base andernfalls zu gering ist.

Sind die nachzuweisenden Säuren und/oder Basen nicht bekannt, so erfolgt die qualitative Detektion bevorzugt mittels GC/MS. Dabei ist bevorzugt eine mittelpolare Säule zu verwenden. Diese mit DB5 benannten Säulen sind typischerweise mit 5% Diphenal und 95 % Dimethylpolysiloxan belegt.

Sind die zu detektierenden Substanzen bekannt, so kann deren quantitative Bestimmung mittels Gaschromatographie erfolgen. Hierbei wird bevorzugt eine unpolare Säule verwendet. Die Eichung erfolgt in üblicher dem Fachmann bekannter Weise. Diese mit DB1 benannten Säulen sind typischerweise mit 100% Dimethylpolysiloxan belegt. Als Detektionssystem

ist ein Flammenionisationsdetektor (FID) geeignet. Die genauen Parameter zur Einstellung des Gaschromatographen (z.B. Säulenlänge und -breite, Säulendruck, etc.) sind dem Fachmann bekannt.
Als Gaschromatograph wird bevorzugt ein GC/FID Autosystem XL (Fa. Perkin Elmer) verwendet.

Die Säuren und Basen können auch mittels anderer massenspektrometrischer Methoden wie beispielsweise TOF- SIMS ermittelt werden. Hierbei ist ggf. ein kontinuierliches Absputtern der Probe nötig, um auch die in der Siliciumoxidschicht, vorzugsweise $SiO_2$- Schicht, befindlichen Katalysatorrestmengen detektieren zu können. Die Methode ist bevorzugt anwendbar im Fall der Verwendung von Aminosilanen als basischer Katalysator, da diese naturgemäß kovalent mit der Siliciumoxidschicht, vorzugsweise $SiO_2$- Schicht, verbunden sind und nicht durch Extraktion aus dieser herauszulösen sind.

Die erfindungsgemäßen Metalleffektpigmente finden Verwendung in Kosmetika, Kunststoffen und Beschichtungszusammensetzungen, vorzugsweise Farben, Druckfarben, Lacken oder Pulverlacken. Besonders bevorzugt sind hierbei Wasserlacke, wässrige Druckfarben oder Kosmetika.

Die erfindungsgemäßen Metalleffektpigmente werden in ihre jeweiligen Anwendungsmedien in üblicher Weise eingearbeitet. Mit diesen so pigmentierten Anwendungsmedien kann dann ein Gegenstand beschichtet werden. Bei diesem Gegenstand kann es sich beispielsweise um eine Karosserie, ein Fassadenelement, etc. handeln.

Im Fall von Kunststoffen kann das erfindungsgemäße Metallpigment auch in das Anwendungsmedium in Masse eingefärbt sein. Die Gegenstände weisen die erfindungsgemäßen Metalleffektpigmente auf und/oder enthalten sie.

Die folgenden Beispiele und die Figur 1 erläutern die Erfindung näher, ohne die Erfindung jedoch zu beschränken:

**Figuren**

Figur 1 zeigt das Deckvermögen (Deckkraft oder Deckfähigkeit) der gemäß den erfindungsgemäßen Beispielen 1 bis 3 und den Vergleichsbeispielen 1 bis 3 beschichteten Aluminiumeffektpigmente sowie im Vergleich zu dem gemäß der Lehre der WO 03/014228 A1 der Firma Merck, Darmstadt, beschichteten Aluminiumeffektpigment.

**Erfindungsgemäßes Beispiel 1:**

150 g einer handelsüblichen Aluminiumeffektpigmentpaste der Typenreihe STAPA METALLUX 3580 der Fa. Eckart GmbH, Hartenstein, mit einer Größenverteilung von $d_{10}$= 7,5 µm, $d_{50}$= 12,1 µm, $d_{90}$= 18,7 µm und einem Feststoffgehalt von 60 Gew.-%, bezogen auf das Gesamtgewicht der Paste, wurden in 500 ml Isopropanol bei Raumtemperatur dispergiert. Innerhalb von 30 min wurden jeweils unabhängig voneinander 0,54 g Phosphorsäure (85%-ig; Fa. Merck, Darmstadt, Deutschland) in 15 g Wasser und 2,25 g Eisen(II)sulfat Heptahydrat in 15 g Wasser gelöst kontinuierlich in die Pigmentdispersion gegeben. Nach 30 min wurden 45 g Tetraethoxysilan und 0,4 g Oxalsäure in 15 g Wasser gelöst zugegeben und die Mischung auf 78°C temperiert. Nach einer Rührzeit von 4 h ohne weitere Zugabe wurde der Ansatz weitere 4 h gerührt, und dabei wurde alle 2 Stunden eine Lösung von 1,5 g Ethylendiamin in 13 g Isopropanol zugegeben. Nach einer weiteren Stunde und Ablauf der Sol-Gel-Reaktion wurden zur organisch-chemischen Nachbeschichtung 1,3 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht.

Das erhaltene Produkt wies eine Größenverteilung von $d_{10}$ =8,1 µm, $d_{50}$=13,0 µm, $d_{90}$=19,3 µm auf.

Elementarverhältnisse in Atomprozent der Pigmentbeschichtung bestimmt durch EDX (12KV):

| | |
|---|---|
| Si: | 80,5% |
| P: | 6,6 % |
| Fe | 12,9 % |

<u>**Quantitative Bestimmung des Gehaltes an Silicium, Phosphor und Eisen mittels EDX**</u>

Die Elementarzusammensetzung der Pigmentbeschichtung lässt sich durch verschiedene Methoden ermitteln. Bevorzugt wird die Elementarbeschichtung mittels EDX-Analyse (energy dispersive X-ray analysis) bestimmt. Dabei wird hier ein Gerät, in dem ein Elektronenmikroskop integriert ist, verwendet, beispielsweise das EDAX Genisis, Version 3.60, Fa. EDAX.

Das Analyseverfahren wird nachfolgend erläutert:
Bei der EDX-Analysemethode dringt der abbildende Elektronenstrahl des Elektronenmikroskops, abhängig von seiner Energie und dem Material, ein Stück weit in die Probenoberfläche ein und gibt seine Energie an die dort befindlichen Atome ab. Aufgrund der hohen Energie der Strahlelektronen werden Elektronen aus den kernnahen Schalen (K- oder L-Schale) der angeregten Atome herausgeschlagen. Bei diesem Vorgang entsteht Röntgenstrahlung aufgrund von zwei

Mechanismen. Die starke Abbremsung der Elektronen erzeugt eine kontinuierlich verteilte Röntgenstrahlung, die Bremsstrahlung, und die Wiederauffüllung der Schalen erzeugt ein diskretes Röntgenspektrum, das charakteristische Linienspektrum des Atoms. Anhand dieser Linienspektren lassen sich die Elemente eindeutig identifizieren.

Das von der zu untersuchenden Probe emittierte Röntgenstrahlungsspektrum wird mittels eines energiedispersiven Röntgenspektrometers gemessen. Es besteht aus dem Bremsstrahlungsuntergrund und einer Reihe von Röntgenspektrallinien. Anhand der Lage der Linien können die emittierenden Elemente bestimmt werden, die Höhe der Linien ist ein Maß für ihre relativen Gehalte in der Probe.

Bei der EDX-Elementanalyse sind für eine korrekte Messung der Elementgehalte folgende Randbedingungen zu beachten. Die zu untersuchenden Proben müssen

a) in ihrer Zusammensetzung homogen sein,
b) die Proben müssen so dick sein, dass der abbildende Elektronenstrahl vollständig in der Probe absorbiert wird und
c) die Proben müssen dem Elektronenstrahl ohne störende Einflüsse einer Matrix und/oder eines Untergrundes frei zugänglich sein.

Je höher die Ordnungszahl der Elemente ist, desto stärker sind auch die kernnahen Elektronen gebunden. Die zur Ionisation erforderliche Energie steigt daher mit der Ordnungszahl an. Die kinetische Energie des Elektronenstrahls muss an die zu analysierenden Elemente angepasst werden. Die Eindringtiefe des Elektronenstrahls in das zu untersuchende Material hängt jedoch von seiner Energie ab. Der Elektronenstrahl dringt in die Probe in einer Intensitätsverteilung, die eine birnenförmige Struktur aufweist, ein ("Anregungsbirne"). Das ist bei der Analyse dünner Schichten zu beachten, da sie von hochenergetischen Elektronen leicht durchschlagen werden. Sollen dünne Schichten (Bereich unter 250 nm) vermessen werden, darf die kinetische Energie nur wenige KeV betragen. Daher wird bei schwereren Elementen auf die Anregung der höheren Schalen ausgewichen. Die Analyse erfolgt dann über die Auswertung der L- oder M-Linien der Elemente.

Im Einzelnen geht man bei der Analyse dünnschichtiger, plättchenförmiger Pigmente folgendermaßen vor: Die EDX - Messeinheit wird vor der Analyse mit Hilfe geeigneter, kommerziell erhältlicher Standards (Firma ASTIMEX) kalibriert.

Mittels elektronenmikroskopischer Abbildungen ist die Schichtstärke der zu untersuchenden Schicht zu bestimmen. Eine Elementaranalyse bei höherer Spannung (ca. 10 bis 20 kV) gibt Aufschluss über alle in der untersuchten Probe vorhandenen Elemente sowie zusätzlich über weitere im darunter liegenden Substrat befindliche Elemente. Anhand der Stärke und der Elementzusammensetzung der Schicht wird mit Hilfe einer Monte-Carlo-Simulation (Programm: EDAX Flight-E, Version 3.1-E, Firma EDAX International) die Elektronenenergie ermittelt, bei der das Schichtvolumen vom eindringenden Elektronenstrahl vollständig ausgefüllt, aber noch nicht durchschlagen wird. In diesem Fall hat die Anregungsbirne das größte Volumen.

Im nächsten Schritt wird ermittelt, ob und bejahendenfalls welche Röntgenlinien bei dieser Strahlenenergie angeregt werden. Eventuell wird die kinetische Anregungsenergie an die Spektrallinien angepasst.

Eine erste Probemessung mit den so ermittelten Parametern wird durchgeführt und analysiert. Sind im Spektrum Röntgenlinien von Substratelementen zu erkennen, so ist die eingestellte Strahlenenergie zu hoch und wird korrigiert.

Nun werden mehrere Messungen an der Schicht mit schrittweise steigender Strahlenspannung durchgeführt und ausgewertet. Die ermittelten Elementgehalte sollten nur geringfügig schwanken. Wenn der Anteil leichter Elemente in der Analyse mit steigender Spannung merkbar abzufallen beginnt, ist die Strahlenenergie zu hoch und wird verringert.

Mit den so ermittelten optimalen Parametern werden an mehreren Stellen der Schicht Messungen durchgeführt und die Elementgehalte ermittelt.

**<u>Quantitative Bestimmung von Resten Carbonsäure bzw. Amin:</u>**

Die Bestimmung von Carbonsäure erfolgt mittels Gaschromatographie mit internem Standard. Dafür wurde eine Probe der beschichteten Metalleffektpigmentpaste im Fall der Carbonsäurebestimmung mit einer definierten Menge Aceton und im Fall der Aminbestimmung in einer definierten Menge Ethanol aufgenommen, 15 min lang im Ultraschallbad behandelt und mit Hexadecan als internem Standard versetzt. Der Feststoff wurde abzentrifugiert und die überstehende Lösung als Injektionslösung für den Gaschromatographen (GC/FID Autosystem XL (Perkin Elmer)) verwendet. Der Gehalt an Carbonsäure wurde mit folgenden Rahmenparametern analysiert:

| | |
|---|---|
| Säule: | 30 m OV 101 0,53 mm |
| Temperaturprogramm: | 45°C 1min isotherm 5°C/min 180°C |
| Injektionboard: | 250°C |
| Detektor: | 320°C |

**Quantitative Bestimmung von EDA:**

Die Probe wurde in gleicher Weise präpariert wie oben angegeben. Der Gaschromatograph (GC/FID Autosystem XL (Perkin Elmer)) wurde mit folgendem Rahmenparametern ausgestattet:

| | |
|---|---|
| Säule: | 30 m OV 101 0,53 mm |
| Temperaturprogramm: | 75°C 10°C/min 200°C |
| Injektionboard: | 250°C |
| Detektor: | 320°C |

Es wurden jeweils 0,01 Gew.-% Oxalsäure und 0,02% EDA, bezogen auf das Gewicht des beschichteten Aluminiumpigments, nachgewiesen.

**Erfindungsgemäßes Beispiel 2:**

261 g einer handelsüblichen Aluminiumeffektpigmentpaste der Typenreihe STAPA METALLUX 2156 der Fa. Eckart GmbH, Hartenstein, mit einer Größenverteilung von $d_{10}$= 9 µm, $d_{50}$= 17 µm, $d_{90}$= 28 µm und einem Feststoffgehalt von 70 Gew.-%, bezogen auf das Gesamtgewicht der Paste, wurden in 300 ml Isopropanol bei Raumtemperatur dispergiert. Innerhalb von 30 min wurden jeweils unabhängig voneinander 0,54 g Phosphorsäure (85%-ig; Fa. Merck, Darmstadt, Deutschland) in 15 g Wasser und 2,25 g Eisen(II)sulfat Heptahydrat in 15 g Wasser gelöst kontinuierlich in die Pigmentdispersion gegeben. Nach 30 min wurden 45 g Tetraethoxysilan und 0,4 g Oxalsäure in 15 g Wasser gelöst zugegeben und die Mischung auf 78°C temperiert. Nach einer Rührzeit von 4 h ohne weitere Zugabe wurde der Ansatz weitere 4 h gerührt, und dabei wurde alle 2 Stunden eine Lösung von 1,5 g Ethylendiamin in 13 g Isopropanol zugegeben. Nach einer weiteren Stunde und Ablauf der Sol-Gel-Reaktion wurden zur organisch-chemischen Nachbeschichtung 1,11 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht. Das erhaltene Produkt wies eine Größenverteilung von $d_{10}$=9,6 µm, $d_{50}$=17,5 µm, $d_{90}$=27,9 µm auf.
Elementarverhältnisse in Atomprozent der Pigmentbeschichtung bestimmt durch EDX (12KV), wie in Beispiel 1 beschrieben:

| | |
|---|---|
| Si: | 82,5% |
| P: | 6,0 % |
| Fe | 11,5 % |

Der Gehalt an Oxalsäure und EDA im Pigment wurde nach der in Beispiel 1 beschriebenen Methode ermittelt. Es wurden 0,01 Gew.-% Oxalsäure und 0,02 Gew.-% EDA, bezogen auf das Gewicht des beschichteten Aluminiumpigments, nachgewiesen.

**Erfindungsgemäßes Beispiel 3:**

250 g einer handelsüblichen Aluminiumeffektpigmentpaste der Typenreihe STAPA METALLUX 8154 der Fa. Eckart GmbH, Hartenstein, mit einer Größenverteilung von $d_{10}$= 9 µm, $d_{50}$= 20 µm, $d_{90}$= 32 µm und einem Feststoffgehalt von 65 Gew.-%, bezogen auf das Gesamtgewicht der Paste, wurden in 600 ml Isopropanol bei Raumtemperatur dispergiert. Innerhalb von 30 min wurden jeweils unabhängig voneinander 0,54 g Phosphorsäure (85%-ig; Fa. Merck, Darmstadt, Deutschland) in 15 g Wasser und 2,25 g Eisen(II)sulfat Heptahydrat in 15 g Wasser gelöst kontinuierlich in die Pigmentdispersion gegeben. Nach 30 min wurden 45 g Tetraethoxysilan und 0,4 g Essigsäure in 15 g Wasser zugegeben und die Mischung auf 78°C temperiert. Nach einer Rührzeit von 4 h ohne weitere Zugabe wurde der Ansatz weitere 4 h gerührt, und dabei wurde alle 2 Stunden eine Lösung von 1,5 g Ethylendiamin in 13 g Isopropanol zugegeben. Nach einer weiteren Stunde und Ablauf der Sol-Gel-Reaktion wurden zur organisch-chemischen Nachbeschichtung 1,2 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht.
Das erhaltene Produkt wies eine Größenverteilung von $d_{10}$=9,6 µm, $d_{50}$=20,1 µm, $d_{90}$=33,1 µm auf.
Elementarverhältnisse der Pigmentbeschichtung bestimmt durch EDX (12KV), wie in Beispiel 1 beschrieben:

| | |
|---|---|
| Si: | 82,5 % |

(fortgesetzt)

| | |
|---|---|
| P: | 5,5 % |
| Fe: | 12,0 % |

Der Gehalt an Essigsäure und EDA im Pigment wurde nach der in Beispiel 1 beschriebenen Methode ermittelt. Es wurden 0,01 Gew.-% Oxalsäure und 0,02 Gew.-% EDA, bezogen auf das Gewicht des beschichteten Aluminiumpigments, nachgewiesen.

**Erfindungsgemäßes Beispiel 4:**

300 g einer handelsüblichen Aluminiumeffektpigmentdispersion der Typenreihe Metalure W-52012 IL der Fa. Avery Dennison, Schererville, Indiana, USA, einem Feststoffgehalt von 20 Gew.-%, bezogen auf das Gesamtgewicht der Paste, wurden in 800 ml Isopropanol bei Raumtemperatur dispergiert. Innerhalb von 30 min wurden jeweils unabhängig voneinander 0,24 g Phosphorsäure (85%-ig; Fa. Merck, Darmstadt, Deutschland) in 10 g Wasser und 0,84 g Eisen(II)sulfat Heptahydrat in 10 g Wasser gelöst kontinuierlich in die Pigmentdispersion gegeben. Nach 30 min wurden 45 g Tetraethoxysilan und 3 g Ethylendiamin in 40 g Wasser unter Erwärmung auf 78°C und weiterer Temperierung bei dieser Temperatur zugegeben. Nach zwei Stunden wird eine Lösung von 3 g Ethylendiamin in 30 g Isopropanol zugegeben. Dieses wird nach drei weiteren Stunden wiederholt, woraufhin der Ansatz noch 4 Stunden bei 78°C gerührt wird. Nach Ablauf der Sol-Gel-Reaktion wurden zur organisch-chemischen Nachbeschichtung 3,0 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht.

Gasungstest (Beschreibung siehe unten): 30d/0mL
(d: Tag(e))

Elementarverhältnisse der Pigmentbeschichtung bestimmt durch EDX (12KV), wie in Beispiel 1 beschrieben:

| | |
|---|---|
| Si: | 91,0 % |
| P: | 3,7 % |
| Fe: | 5,3 % |

Der Gehalt an EDA im Pigment wurde nach der in Beispiel 1 beschriebenen Methode ermittelt. Es wurden 0,04 Gew.-% EDA, bezogen auf das Gewicht des beschichteten Aluminiumpigments, nachgewiesen.

**Erfindungsgemäßes Beispiel 5:**

150 g einer handelsüblichen Aluminiumeffektpigmentpaste der Typenreihe STAPA METALLUX 3580 der Fa. Eckart GmbH, Hartenstein mit einer Größenverteilung von $d_{10}$= 7,5 µm, $d_{50}$= 12,1 µm, $d_{90}$= 18,7 µm und einem Feststoffgehalt von 60 Gew.-%, bezogen auf das Gesamtgewicht der Paste, wurden in 500 ml Isopropanol bei Raumtemperatur dispergiert. Nach einer Stunde wurde 5,10 g Bariumacetat (Fa. Merck, Darmstadt, Deutschland) in 15 g Wasser gelöst, innerhalb von einer Stunde kontinuierlich in die Pigmentdispersion gegeben. Nach 30 min wurden 45 g Tetraethoxysilan und 2,00 g konzentrierte Schwefelsäure in 15 g Wasser gelöst zugegeben und die Mischung auf 78°C temperiert. Nach einer Rührzeit von 4 h ohne weitere Zugabe wurde der Ansatz weitere 4 h gerührt, und dabei wurde alle 2 Stunden eine Lösung von 2,0 g Ethylendiamin in 13 g Isopropanol zugegeben. Nach einer weiteren Stunde und Ablauf der Sol-Gel-Reaktion wurden zur organisch-chemischen Nachbeschichtung 1,3 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht.

Das erhaltene Produkt wies eine Größenverteilung von $d_{10}$=8,5 µm, $d_{50}$=14,1 µm, $d_{90}$=19,6 µm auf.

Elementarverhältnisse der Pigmentbeschichtung bestimmt durch EDX (12KV):

| | |
|---|---|
| Si: | 81,8% |
| S: | 7,1 % |
| Ba: | 11,1 % |

Der Gehalt des Pigments an Resten EDA wurde nach der oben beschriebenen Methode ermittelt. Es wurden 0,01 Gew.-% EDA, bezogen auf das Gewicht des beschichteten Aluminiumpigments, nachgewiesen.

**Enfndungsgemäßes Beispiel 6:**

150 g einer handelsüblichen Aluminiumeffektpigmentpaste der Typenreihe STAPA METALLUX 3580 der Fa. Eckart GmbH, Hartenstein, mit einer Größenverteilung von $d_{10}$= 7,5 µm, $d_{50}$= 12,1 µm, $d_{90}$= 18,7 µm und einem Feststoffgehalt von 60 Gew.-%, bezogen auf das Gesamtgewicht der Paste, wurden in 500 ml Isopropanol bei Raumtemperatur dispergiert. Nach zwei Stunden wurden jeweils unabhängig voneinander 0,54 g Phosphorsäure (85%ig; Fa. Merck, Darmstadt, Deutschland) in 15 g Wasser und 2,17 g Zinksulfat Heptahydrat in 15 g Wasser gelöst, gleichzeitig innerhalb von einer Stunde kontinuierlich in die Pigmentdispersion gegeben. Nach 30 min wurden 45 g Tetraethoxysilan und 0,4 g Oxalsäure in 15 g Wasser gelöst zugegeben und die Mischung auf 78°C temperiert. Nach einer Rührzeit von 4 h ohne weitere Zugabe wurde der Ansatz weitere 4 h gerührt, und dabei wurde alle 2 Stunden eine Lösung von 1,5 g Ethylendiamin in 13 g Isopropanol zugegeben. Nach einer weiteren Stunde und Ablauf der Sol-Gel-Reaktion wurden zur organisch-chemischen Nachbeschichtung 1,3 g Dynasylan AMMO, erhältlich bei Degussa AG, Rheinfelden, Deutschland, zugegeben und der Ansatz für 15 min gerührt. Danach wurde auf Raumtemperatur abgekühlt und über einen Büchnertrichter abgenutscht.

Das erhaltene Produkt wies eine Größenverteilung von $d_{10}$=8,2 µm, $d_{50}$=13,5 µm, $d_{90}$=19,6 µm auf.

Elementarverhältnisse der Pigmentbeschichtung bestimmt durch EDX (12KV):

| | |
|---|---|
| Si: | 83,5% |
| P: | 5,6% |
| Zn: | 10,9 % |

Der Gehalt des Pigments an Resten Oxalsäure und EDA wurde nach der oben beschriebenen Methode ermittelt. Es wurden 0,01 Gew.-% Oxalsäure und 0,01 Gew.-% EDA, bezogen auf das Gewicht des beschichteten Aluminiumpigments, nachgewiesen.

**Vergleichsbeispiel 1:**

150 g von der in dem erfindungsgemäßen Beispiel 1 eingesetzten Aluminiumeffektpigmentpaste STAPA METALLUX 3580 wurden in 500 ml Isopropanol bei Raumtemperatur dispergiert. Nach 30 Minuten wurden 45 g Tetraethoxysilan zugegeben und die Mischung auf 78°C erwärmt und bei dieser Temperatur temperiert. Anschließend wurde eine Lösung von 1,8 g Ethylendiamin (EDA) in 45 g Wasser zugesetzt und das Reaktionsgemisch drei Stunden lang gerührt. Anschließend wurde eine Lösung von 1,7 g Ethylendiamin mit 18,6 g Isopropanol in das Reaktionsgemisch gegeben und sieben Stunden lang gerührt. Nach Ablauf der Sol-Gel-Reaktion wurden zur organisch-chemischen Nachbeschichtung 1,2 g Dynasylan AMMO, erhältlich bei Degussa AG, Rheinfelden, Deutschland zugegeben. Die erhaltene Metalleffektpigmentmischung wurde auf Raumtemperatur abgekühlt und über einen Büchnertrichter abgenutscht.

Das erhaltene Produkt wies eine Größenverteilung von $d_{10}$=10,3 µm, $d_{50}$=15,6 µm, $d_{90}$=22,4 µm auf.

Der Gehalt an EDA im Pigment wurde nach der in Beispiel 1 beschriebenen Methode ermittelt. Es wurde 0,02 Gew.-% EDA, bezogen auf das Gewicht des beschichteten Aluminiumpigments, nachgewiesen.

**Vergleichsbeispiel 2:**

150 g von der in dem erfindungsgemäßen Beispiel 2 eingesetzten Aluminiumeffektpigmentpaste STAPA METALLUX 2156 wurden in 350 ml Isopropanol bei Raumtemperatur dispergiert. Nach 30 Minuten wurden 45 g Tetraethoxysilan zugegeben und die Mischung auf 78°C erwärmt und bei dieser Temperatur temperiert. Anschließend wurde eine Lösung von 1,7 g Ethylendiamin in 45 g Wasser zugesetzt und das Reaktionsgemisch sieben Stunden lang gerührt. Anschließend wurde eine Lösung von 1,7 g Ethylendiamin mit 18,6 g Isopropanol in das Reaktionsgemisch gegeben und 3 Stunden lang gerührt. Nach Ablauf der Sol-Gel-Reaktion wurden zur organisch-chemischen Nachbeschichtung 1,2 g Dynasylan AMMO, erhältlich bei Degussa AG, Rheinfelden, Deutschland zugegeben. Die erhaltene Metalleffektpigmentmischung wurde auf Raumtemperatur abgekühlt und über einen Büchnertrichter abgenutscht.

Das erhaltene Produkt wies eine Größenverteilung von $d_{10}$=12,8 µm, $d_{50}$=20,6 µm, $d_{90}$=31,4 µm auf.

Der Gehalt an EDA im Pigment wurde nach der in Beispiel 1 beschriebenen Methode ermittelt. Es wurde 0,02 Gew.-% EDA, bezogen auf das Gewicht des beschichteten Aluminiumpigments, nachgewiesen.

**Vergleichsbeispiel 3:**

250 g von der in dem erfindungsgemäßen Beispiel 3 eingesetzten Aluminiumeffektpigmentpaste STAPA METALLUX 8154 wurden in 600 ml Isopropanol bei Raumtemperatur dispergiert. Nach 30 Minuten wurden 45 g Tetraethoxysilan zugegeben und die Mischung auf 78°C erwärmt und bei dieser Temperatur temperiert. Anschließend wurde eine Lösung von 2,0 g Ethylendiamin in 60 g Wasser zugesetzt und das Reaktionsgemisch sieben Stunden lang gerührt. Anschließend wurde eine Lösung von 2,0 g Ethylendiamin mit 39 g Isopropanol in das Reaktionsgemisch gegeben und drei Stunden lang gerührt. Nach Ablauf der Sol-Gel-Reaktion wurden zur organisch-chemischen Nachbeschichtung 1,2 g Dynasylan AMMO erhältlich bei Degussa AG, Rheinfelden, Deutschland zugegeben. Die erhaltene Metalleffektpigmentmischung wurde auf Raumtemperatur abgekühlt und über einen Büchnertrichter abgenutscht.

Das erhaltene Produkt wies eine Größenverteilung von $d_{10}$=10,3 µm, $d_{50}$=20,2 µm, $d_{90}$=33,0 µm auf. Der Gehalt an EDA im Pigment wurde nach der in Beispiel 1 beschriebenen Methode ermittelt. Es wurde 0,02 Gew.-% EDA, bezogen auf das Gewicht des beschichteten Aluminiumpigments, nachgewiesen.

**<u>Vergleichsbeispiel Nr. 4 (gemäß WO 03/014228 A1)</u>**

83, 3 g STAPA METALLUX 3580 wurden in einem Becherglas in 500 mL Aceton 15 min lang vordispergiert. Danach erfolgte die Zugabe von 1 g Phosphorsäure (85%ig) . Die Mischung wurde für 30 min bei Raumtemperatur gerührt. Nach Ablauf der Zeit wurde der Feststoff des Ansatzes auf einem Büchnertrichter abgenutscht und mit 300 g Aceton gewaschen. Der erhaltene Feststoff wurde in 850 g Ethanol aufgenommen und mit 197, 5 g Wasser und 22, 4 g Ammoniaklösung (25%- ig in Wasser) versetzt. Die so erhaltene Lösung wurde dann auf 65°C erwärmt und mit 35, 2 g Tetraethoxysilan in 76 mL Ethanol versetzt. Nach Ablauf der Sol- Gel- Reaktion (7 h) wurden zur organisch- chemischen Nachbeschichtung 3, 0 g Dynasylan AMMO, erhältlich bei Degussa AG, Rheinfelden, Deutschland, zugegeben Die Lösung wurde für weitere 13 h gerührt, bevor das Pigment auf einem Büchnertrichter abgenutscht wurde.

Das erhaltene Produkt wies eine Größenverteilung von $d_{10}$=13,5 µm, $d_{50}$=31,0 µm, $d_{90}$=61,8 µm auf.

**<u>Vergleichsbeispiel 5 (PVD)</u>**

300 g einer handelsüblichen Aluminiumeffektpigmentpaste der Typenreihe Metalure W-52012 IL der Fa. Avery Dennison, Schererville, Indiana, USA, mit einem Feststoffgehalt von 20 Gew.-%, bezogen auf das Gesamtgewicht der Paste, wurden in 800 ml Isopropanol bei Raumtemperatur dispergiert. Nach 30 Minuten Dispergierzeit wurden 45 g Tetraethoxysilan und 3,0 g Ethylendiamin in 40 g Wasser unter Erwärmung der Mischung auf 78 °C und weiterer Temperierung bei dieser Temperatur zugegeben. Nach drei Stunden wurde eine Lösung von 3,0 g Ethylendiamin in 30 g Isopropanol zugegeben. Dieses wurde nach drei weiteren Stunden wiederholt, woraufhin der Ansatz noch 4 Stunden bei 78°C gerührt wurde. Nach Ablauf der Sol-Gel-Reaktion wurden zur organisch-chemischen Nachbeschichtung 3,0 g Dynasylan AMMO, erhältlich bei Degussa AG, Rheinfelden, Deutschland, zugegeben und der Ansatz wurde für 15 min gerührt. Danach wurde auf Raumtemperatur abgekühlt und über einen Büchnertrichter abgenutscht.

Der Gehalt an EDA im Pigment wurde nach der in Beispiel 1 beschriebenen Methode ermittelt. Es wurde 0,03 Gew.-% EDA, bezogen auf das Gewicht des beschichteten Aluminiumpigments, nachgewiesen.

**Gasungstest:**

Alle beschichteten Metalleffektpigmente wurden zwei Gasungstests unterzogen. Für den Gasungstest 1 wurden 8, 6 g beschichtetes Al- Pigment in Form einer Paste in 315 g farblosen Wasser- Mischlack (ZW42- 1100, Fa. BASF Würzburg) eingearbeitet und mit Dimethanolethanolamin auf einen pH- Wert von 8, 2 gebracht. Von diesem Lack wurden 300 g in eine Gaswaschflasche eingefüllt und diese mit einem Doppelkammergasblasenzähler verschlossen. Das entstandene Gasvolumen wurde anhand des verdrängten Wasservolumens in der unteren Kammer des Gasblasenzählers abgelesen. Die Gaswaschflasche wurde in einem Wasserbad bei 40°C temperiert und der Test über maximal 30 Tage durchgeführt. Bei einer Entwicklung von maximal 10, 5 ml Wasserstoff nach 30 Tagen gilt der Test als bestanden.

Ein weiterer Gasungstest 2, um die Korrosionsbeständigkeit von Metalleffektpigmenten zu ermitteln, ist die Abmischung mit Eisenoxid (Eisenoxidrot- Gasungstest, BASF) . Dafür wird eine Anteigung von 9, 75 g Aluminium (berechnet aus dem Feststoffgehalt der Paste) , 19, 5 g Eisenoxidrot- Tönpaste, 19, 5 g Butylglycol und 15 g Bindemittel hergestellt. Von dieser Anteigung werden 23 g in ein Lackgemisch, (Fa BASF, Würzburg) eingebracht und auf pH = 8, 0 eingestellt. Von diesem Lack wurden 300 g in eine Gaswaschflasche eingefüllt und diese mit einem Doppelkammergasblasenzähler verschlossen. Das entstandene Gasvolumen wurde anhand des verdrängten Wasservolumens in der unteren Kammer des Gasblasenzählers abgelesen. Die Gaswaschflasche wurde in einem Wasserbad bei 40°C temperiert und der Test über maximal 56 Tage durchgeführt. Bei einer Entwicklung von maximal 5 ml Wasserstoff nach 56 Tagen gilt der Test als bestanden.

In Tabelle 1 sind die Partikelgrößenverteilungen der Ausgangspigmente sowie der beschichteten Pigmente als auch die Beständigkeit der Pigmente im Gasungstest für die in den erfindungsgemäßen Beispielen 1 bis 6 und der Vergleichsbeispielen 1 bis 4 hergestellten Pigmente angegeben.

**Deckkraft:**

Zur Bewertung des Deckvermögens (Deckkraft) der Aluminiumeffektpigmente der Beispiele und Vergleichsbeispiele wurden von diesen Rakelabzüge (Pigmentierung jeweils 5 Gew.-% beschichtetes Metalleffektpigment in Erco Bronzemischlack RE 2615 Farblos, Nassschichtdicke: 50 μm) auf einer handelsüblichen schwarz-weißen Deckungskarte (Typ24/5, 250cm$^3$, Erichsen GmbH & Co KG, Hemer-Sundwig) angefertigt und anschließend eine Farbmessung mit einem handelsüblichen Messgerät der Fa. X-Rite bei einem Betrachtungswinkel von 110° und bei einem Licht-Einfallswinkel von 45° durchgeführt. Als Maß für die Deckung wurde der Quotient der Helligkeitswerte bei diesem Messwinkel von der schwarzen zur weißen Seite der Deckungskarte. Diese Größe ist in Fig. 1 für die verschiedenen Proben graphisch dargestellt.

Je näher sich das Verhältnis der gemessenen Helligkeiten dem Wert 1 annähert, desto besser ist die Deckung.

Ferner wurde mittels Lasergranulometrie in üblicher Weise die Größenverteilung der Aluminiumeffektpigmente der Beispiele und Vergleichsbeispiele ermittelt Hierbei wurde ein Cilas 1064 Gerät verwendet (Fa. Cilas, Frankreich) . In Tab. 1 sind die üblichen Kennwerte $d_{10}$- (Feinanteil) , $d_{50}$- (Mittelwert) und $d_{90}$- Werte (Grobanteil) der entsprechenden Summendurchgangskurve dargestellt. Diese Werte stellen volumengemittelte Werte von Äquivalentkugeln dar.

**Tabelle 1**

| Probe | Ausgangsmaterial Aluminiumpigment | $D_{10}/D_{50}/D_{90}$ in [μm] Cilas 1064 Ausgangspigment | $D_{10}/D_{50}/D_{90}$ in [μm] Cilas 1064 beschichtetes Pigment | Gasungstest 1 nach 30 d in [ml] | Gasungstest 2 mit Eisenoxid (rot) nach 56 d in [ml] |
|---|---|---|---|---|---|
| Erfindungsgemäßes Beispiel 1 | MEX 3580 (Eckart) | 7, 5/12, 1/18, 7 | 8, 1/13, 0/19, 3 | 0 | 0 |
| Vergleichsbeispiel 1 | MEX 3580 (Eckart) | 7, 5/12, 1/18, 7 | 10, 3/15, 6/22, 4 | < 14 d | 48 d |
| Erfindungsgemäßes Beispiel 2 | MEX 2156 (Eckart) | 9/17/28 | 9, 6/17, 5/27, 9 | 0 | 0 |
| Vergleichsbeispiel 2 | MEX 2156 (Eckart) | 9/17/28 | 12, 8/20, 6/31, 4 | 4 ml | 4 ml |
| Erfindungsgemäßes Beispiel 3 | MEX 8154 (Eckart) | 9/20/32 | 9, 6/20, 1/33, 1 | 0 | 0 |
| Vergleichsbeispiel 3 | MEX 8154 (Eckart) | 9/20/32 | 10, 3/20, 2/33, 0 | 6,2 | 2 |
| Erfindungsgemäßes Beispiel 4 | Metalure W-52012 IL (Avery Dennison) | 4, 3/11, 4/19, 2 | 4, 5/11, 7/19, 6 | 0 | 2,7 ml |
| Vergleichsbeispiel 4 | MEX 3580 (Eckart) | 7, 5/12, 1/18, 7 | 13, 5/31, 0/61, 8 | 1 d | <1 d |
| Erfindungsgemäßes Beispiel 5 | MEX 3580 (Eckart) | 7, 5/12, 1/18, 7 | 8, 5/14, 1/19, 6 | 27 ml | 5 ml |
| Erfindungsgemäßes Beispiel 6 | MEX 3580 (Eckart) | 7, 5/12, 1/18, 7 | 8, 8/14, 4/20, 0 | 25 ml | 4 ml |
| Vergleichsbeispiel 5 | Metalure W-52012 IL (Avery Dennison) | 4, 3/11, 4/19, 2 | 4, 5/11, 6/19, 3 | 4 d | 26 d |
| d: Tag(e). Angabe der Tage nach dem die erlaubte Höchstmenge des entwickelten Wasserstoffs überschritten wurde. | | | | | |

Tabelle 1 ist zu entnehmen, dass der Unterschied der Teilchengrößenverteilung zwischen den jeweils eingesetzten Aluminiumpigmenten und den sodann nach dem erfindungsgemäßen Verfahren beschichteten Aluminiumefiektpigmenten (erfindungsgemäße Beispiele 1 bis 6) nur geringfügig ist. Bei den Vergleichsbeispielen sind die Unterschiede

bei der Größenverteilung zwischen den eingesetzten Aluminiumeffektpigmenten und den nach der Beschichtung erhaltenen Aluminiumeffektpigmenten wesentlich größer. Dies ist auf eine zunehmende Agglomeration der Metalleffektpigmentteilchen zurückzuführen.

Eine geringfügige Veränderung bei der Partikelgrößenverteilung führt dazu, dass die Deckkraft der erfindungsgemäßen Aluminiumeffektpigmente durch die Beschichtung, verglichen mit den herkömmlich beschichteten Aluminiumeffektpigmenten, nicht wesentlich beeinträchtigt wird und mithin sehr viel besser ist als bei den beschichteten Pigmenten, die in den Vergleichsbeispielen erhalten wurden. Die Deckkraft der Aluminiumeffektpigmente für einige erfindungsgemäßen Beispiele und Vergleichsbeispiele ist in Fig. 1 veranschaulicht. Bemerkenswert ist hier insbesondere der (im Vergleich zu Beispiel 1 und Vergleichsbeispiel 1) zu sehende sehr schlechte Deckungswert des Vergleichbeispiels 4, welches in Anlehnung an die WO 03/014228 A1 durchgeführt wurde.

Darüber hinaus weisen die erfindungsgemäßen Aluminiumeffektpigmente, verglichen mit einem herkömmlichen Sol-Gel-Verfahren beschichteten Aluminiumeffektpigmenten, eine signifikant verbesserte Gasungsbeständigkeit auf, wie Tabelle 1 zu entnehmen ist. Hierbei sollten nicht die Absolutwerte der Gasungstests herangezogen werden, sondern immer die Werte der zu einem Ausgangsmaterial korrespondierenden erfindungsgemäßen Beispiele und der Vergleichsbeispiele verglichen werden. Bei den Vergleichsbeispielen 1, u 4 und 5 musste der Gasungstest 1 nach etwa 14 Tagen bzw. nach 1 bzw. 4 Tagen abgebrochen werden, da die Pigmente vollständig aufgelöst waren, mithin eine Zeitdauer von 30 Tagen (30 d) nicht erreichten. Auch im Gasungstest 2 zeigte sich die verbesserte Beständigkeit der erfindungsgemäßen Pigmentbeschichtungen, da alle erfindungsgemäßen Beispiele wie auch im Gasungstest 1 jeweils keine meßbare (0 mL bei Beispiele 1 bis 4) oder eine akzeptable (Beispiele 5-6) Wasserstoffentwicklung zeigten. Im Gegensatz dazu musste bei den Vergleichsbeispielen in einem Fall der Test nach einem Tag abgebrochen werden. Bei den anderen Vergleichsbeispielen zeigte sich eine Wasserstoffentwicklung von 2 bis 7,3 mL nach einer Testzeit von 56 Tagen. Auch in den Fällen, bei denen die Metalleffektpigmente der Vergleichsbeispiele den Gasungstest bestehen, sind die Pigmente der korrespondierenden erfindungsgemäßen Beispiele herausragend besser.

Die gute Balance zwischen Deckkraft (Deckvermögen) und Gasungsstabilität der nach dem erfindungsgemäßen Verfahren mit Metallkationen, vorliegend Fe (III)- Ionen, und phosphorhaltigen Anionen, vorliegend Phosphationen, behandelten Aluminiumeffektpigmenten sowie mit dem in zwei Stufen aufgebrachten Siliciumoxid beschichteten Aluminiumeffektpigmenten ist vermutlich darauf zurückzuführen, dass zum Einen die Korrosionsstabilität insbesondere durch den Zusatz an Fe (III)- Ionen und Phosphationen die Stabilität gegenüber Korrosion aus bislang nicht verstandenen Gründen erhöht und zum Anderen trotz $SiO_2$- Beschichtung ein überraschend großer Feinanteil separat erhalten bleibt, wodurch die Deckkraft signifikant verbessert wird.

In zusammenfassender Bewertung der Versuchsergebnisse ist festzustellen, dass die nach dem erfindungsgemäßen Verfahren beschichteten Aluminiumeffektpigmente deutlich bessere Anwendungseigenschaften hinsichtlich Deckkraft (Deckvermögen) bei gleichzeitig hervorragender Gasungsstabilität aufweisen, verglichen mit nach herkömmlichem Sol-Gel-Verfahren mit $SiO_2$ beschichteten Aluminiumeffektpigmenten.

Hinsichtlich weiterer optischer Eigenschaften wie Glanz und Hell-Dunkel-Flop zeigten die erfindungsgemäßen Metalleffektpigmente in diversen Applikationen keinerlei Einbußen im jeweiligen Vergleich zu den Pigmenten der Vergleichsbeispiele.

Die erfindungsgemäß hergestellten Aluminiumeffektpigmente sind deshalb sowohl in wässrigen Lacksystemen, wässrigen Farben, wässrigen Druckfarben als auch in Kosmetika, die üblicherweise ebenfalls wasserhaltig ist, besonders vorteilhaft einsetzbar.

## Patentansprüche

1. Metalleffektpigment, ausgewählt aus der Gruppe, bestehend aus plättchenförmigem Aluminium, plättchenförmigen Metallpigmenten mit einem Kupferanteil von 60 bis 100 Gew.-% und Mischungen davon, aufweisend eine Beschichtung aus Siliciumoxid $SiO_x$, wobei x eine Zahl von 1 bis 2 ist,
   **dadurch gekennzeichnet,**
   **dass** das beschichtete Metalleffektpigment einerseits Metallkationen und andererseits phosphor- und/oder schwefelhaltige Anionen enthält, wobei die Metallkationen und phosphor- und/oder schwefelhaltigen Anionen jeweils unabhängig voneinander auf der Metalleffektpigmentoberfläche und/oder in der Siliciumoxidschicht $SiO_x$ vorhanden sind und wobei das Elementverhältnis in Atomanteilen von Metallkation MK und Phosphor P und/oder Schwefel S zu Silicium Si jeweils gemäß den Formeln (I) und (II)

$$100\% \times (MK+P) / Si \qquad (I)$$

und/oder

$$100\% \times (MK+S) / Si \qquad (II)$$

definiert ist und insgesamt in einem Bereich von 0,5 bis 35 % liegt.

**2.** Metalleffektpigment nach Anspruch 1,
**dadurch gekennzeichnet,**
**dass** das Metallkation MK mit den phosphorhaltigen und/oder schwefelhaltigen Anionen in wässriger Lösung innerhalb eines pH-Bereichs von 5 bis 8 jeweils ein schwerlösliches Salz bilden kann.

**3.** Metalleffektpigment nach einem der Ansprüche 1 oder 2,
**dadurch gekennzeichnet,**
**dass** die Metallkationen und die phosphor- und/oder schwefelhaltige Anionen überwiegend in der $SiO_x$-Schicht vorhanden sind.

**4.** Metalleffektpigment nach einem der Ansprüche 1 oder 2,
**dadurch gekennzeichnet,**
**dass** die Metallkationen und die phosphor- und/oder schwefelhaltige Anionen überwiegend auf der Metalleffektpigmentoberfläche vorhanden sind.

**5.** Metalleffektpigment nach einem der Ansprüche 1 bis 4,
**dadurch gekennzeichnet,**
**dass** die Metallkationen mit den phosphor- und/oder schwefelhaltigen Anionen wenigstens teilweise miteinander als schwerlösliches Salz vorliegen.

**6.** Metalieffektpigment nach Anspruch 1,
**dadurch gekennzeichnet,**
**dass** die phosphor- und/oder schwefelhaltigen Anionen überwiegend auf der Metalleffektpigmentoberfläche und die Metallkationen überwiegend in der $SiO_x$-Schicht vorhanden sind.

**7.** Metalleffektpigment nach Anspruch 1,
**dadurch gekennzeichnet,**
**dass** die Metallkationen überwiegend auf der Metalleffektpigmentoberfläche und die phosphor- und/oder schwefelhaltigen Anionen überwiegend in der $SiO_x$-Schicht vorhanden sind.

**8.** Metalleffektpigment nach einem der vorstehenden Ansprüche,
**dadurch gekennzeichnet,**
**dass** die Metallkationen für die phosphorhaltigen Anionen aus der Gruppe, die aus Ag(I), Cu(II), Cd(II), Cr((III), Co (II), Pb(II), Hg(I), Hg(II), Mg(II), Al(III), Zn(II), Sn(II), Ca(II), Sr(II), Ba(II), Mn(II), Bi(III), Zr(IV), Ni(II), Fe(II), Fe(III) und Mischungen davon sowie deren Mischungen mit Ammoniumionen besteht, ausgewählt werden.

**9.** Metalleffektpigment nach einem der vorstehenden Ansprüche,
**dadurch gekennzeichnet,**
**dass** die $SiO_x$-Schicht in Mengen von 2 Gew.-% bis 25 Gew.-%, gerechnet als $SiO_2$ und bezogen auf das Gewicht des Metalleffektpigmentsubstrats, vorliegt.

**10.** Metalleffektpigment nach einem der vorherigen Ansprüche,
**dadurch gekennzeichnet,**
**dass** die Metalleffektpigmente als Pulver, Trockenpräparat oder Paste vorliegen und in und/oder auf der Siliciumoxidschicht und/oder im Lösemittel der Paste
0,01 - 1 Gew.-% organische und/oder anorganische Säure und
0,01 - 1 Gew.-% organische und/oder anorganische Base vorliegt, wobei sich die Gew.-% Angaben auf das Gesamtgewicht des Pigments beziehen.

**11.** Metalleffektpigmente nach einem der vorstehenden Ansprüche,

**dadurch gekennzeichnet,**
**dass** die Metalleffektpigmente in einer Gesamtheit vorliegen, wobei die Gesamtheit mindestens drei mit Siliciumoxid beschichtete Metalleffektpigmente umfasst, deren $d_{50}$-Werte des Durchmessers sich jeweils um 2 bis 6 $\mu$m unterscheiden, wobei das der kleinste $d_{50}$-Wert eines Metalleffektpigments aus der Gesamtheit maximal 5 $\mu$m beträgt.

**12.** Verfahren zum Herstellen von mit Siliciumoxid beschichteten Metalleffektpigmenten nach einem der vorhergehenden Ansprüche, **dadurch gekennzeichnet,**
**dass** das Verfahren folgende Schritte umfasst:

(a) Aufbringen von Siliciumoxid auf die Metalleffektpigmente unter Umsetzung von Alkoxysilan(en) und/oder Siliciumhalogenid(en) in organischem Lösungsmittel mit Wasser in Anwesenheit einer Säure und/oder Base als Katalysator,
(b) Zugabe von phosphor- und/oder schwefelhaltigen Anionen und Metallkationen zu den Metalleffektpigmenten vor oder während Schritt (a) unter Aufnahme von phosphor- und/oder schwefelhaltigen Anionen und Metallkationen auf die Metalleffektpigmentoberfläche und/oder in die Siliciumoxidschicht,
(c) optional Aufbringen einer Oberflächenmodifizierung auf die Siliciumoxidoberfläche.

**13.** Verfahren nach Anspruch 12,
**dadurch gekennzeichnet,**
**dass** die Zugabe der phosphor- und/oder schwefelhaltigen Anionen einerseits und der Metallkationen andererseits in getrennten Schritten, gleichzeitig oder nacheinander erfolgt.

**14.** Verfahren nach einem der Ansprüche 12 bis 13,
**dadurch gekennzeichnet,**
**dass** das Aufbringen von Siliciumoxid unter Umsetzung von Alkoxysilan(en) in organischem Lösungsmittel mit Wasser durch Säuren und Basen katalysiert wird, wobei

(i) die Umsetzung in einem ersten Schritt unter Zugabe von Säure und in einem zweiten Schritt unter Zugabe von Base durchgeführt wird oder
(ii) die Umsetzung in einem ersten Schritt unter Zugabe von Base und in einem zweiten Schritt unter Zugabe von Säure durchgeführt wird.

**15.** Verwendung von Metalleffektpigment nach einem der Ansprüche 1 bis 11 in Kosmetika, Kunststoffen und Beschichtungszusammensetzungen, vorzugsweise Farben, Druckfarben, Lacken, Pulverlacken.

## Claims

**1.** Metal effect pigment, selected from the group comprising platelet-shaped aluminium, platelet-shaped metal pigments with a copper content of 60 to 100 % by weight and mixtures thereof, having a coating of silicon oxide $SiO_x$, where x is a number from 1 to 2,
**characterised in that**
the coated metal effect pigment contains metal cations on the one hand and phosphor- and/or sulphur-containing anions on the other hand, and the metal cations and phosphor- and/or sulphur-containing anions are present each independently of one another on the metal effect pigment surface and/or in the silicon oxide layer $SiO_x$, and the ratio of elements in proportions of atoms of metal cations MK and phosphor P and/or sulphur S to silicon Si is defined respectively by formulas (I) and (II)

$$100\% \text{ x } (MK+P) / Si \qquad (I)$$

and/or

$$100\% \text{ x } (MK+S) / Si \qquad (II)$$

and lies in total in a range of from 0.5 to 35 %.

2. Metal effect pigment as claimed in claim 1,
**characterised in that**
the metal cation MK is capable of forming a salt that is not readily soluble respectively with the phosphor- and/or sulphur-containing anions in aqueous solution within a pH range of 5 to 8.

3. Metal effect pigment as claimed in one of claims 1 or 2,
**characterised in that**
the metal cation and the phosphor and/or sulphur-containing anions are present predominantly in the $SiO_x$layer.

4. Metal effect pigment as claimed in one of claims 1 or 2,
**characterised in that**
the metal cations and the phosphor- and/or sulphur-containing anions are present predominantly on the metal effect pigment surface.

5. Metal effect pigment as claimed in one of claims 1 to 4,
**characterised in that**
the metal cations with the phosphor- and/or sulphur-containing anions are present at least partially with one another in the form of a salt that is not readily soluble.

6. Metal effect pigment as claimed in claim 1,
**characterised in that**
the phosphor- and/or sulphur-containing anions are present predominantly on the metal effect pigment surface and the metal cations are present predominantly in the $SiO_x$ layer.

7. Metal effect pigment as claimed in claim 1,
**characterised in that**
the metal cations are present predominantly on the metal effect pigment surface and the phosphor- and/or sulphur-containing anions are present predominantly in the $SiO_x$ layer.

8. Metal effect pigment as claimed in one of the preceding claims,
**characterised in that**
the metal cations for the phosphor-containing anions are selected from the group comprising Ag(I), Cu(II), Cd(II), Cr(III), Co(II), Pb(II), Hg(I), Hg(II), Mg(II), Al(III), Zn(II), Sn(II), Ca(II), Sr(II), Ba(II), Mn(II), Bi(III), Zr(IV), Ni(II), Fe(II), Fe(III) and mixtures thereof as well as mixtures thereof with ammonium ions.

9. Metal effect pigment as claimed in one of the preceding claims,
**characterised in that**
the $SiO_x$ layer is present in quantities of 2 % by weight to 25 % by weight, calculated as $SiO_2$ and based on the weight of the metal effect pigment substrate.

10. Metal effect pigment as claimed in one of the preceding claims,
**characterised in that**
the metal effect pigments are present in the form of powder, dry product or paste and in and/or on the silicon oxide layer and/or in the solvent of the paste there is
0.01 - 1 % by weight of organic and/or inorganic acid and
0.01 - 1 % by weight or organic and/or inorganic base, and the figures for % by weight relate to the total weight of the pigment.

11. Metal effect pigment as claimed in one of the preceding claims,
**characterised in that**
the metal effect pigments are present in an entirety, the entirety comprising at least three metal effect pigments coated with silicon oxide, of which the $d_{50}$ values for diameter differ respectively by 2 to 6 $\mu$m, and the smallest $d_{50}$ value of one metal effect pigment out of the entirety is at most 5 $\mu$m.

12. Method of producing metal effect pigments coated with silicon oxide as claimed in one of the preceding claims,
**characterised in that**
the method comprises the following steps:

(a) applying silicon oxide to the metal effect pigments by reacting alkoxy silane(s) and/or silicon halogenide(s) in organic solvent with water in the presence of an acid and/or a base as a catalyst,
(b) adding phosphor- and/or sulphur-containing anions and metal cations to the metal effect pigments before or during step (a) so that phosphor- and/or sulphur-containing anions and metal cations are taken up on the metal effect pigment surface and/or in the silicon oxide layer,
(c) optionally applying a surface modification to the silicon oxide surface.

**13.** Method as claimed in claim 12,
**characterised in that**
the phosphor- and/or sulphur-containing anions on the one hand and the metal cations on the other hand are added in separate steps, simultaneously or consecutively.

**14.** Method as claimed in one of claims 12 to 13,
**characterised in that**
silicon oxide is applied by reacting alkoxy silane(s) in organic solvent with water catalysed by acids and bases, and

(i) the reaction is effected in a first step by adding acid and in a second step by adding base or
(ii) the reaction is effected in a first step by adding base and in a second step by adding acid.

**15.** Use of metal effect pigment as claimed in one of claims 1 to 11 in cosmetics, plastics and coating compositions, preferably paints, printing inks, varnishes, powder coatings.

## Revendications

**1.** Pigment à effet métallisé, choisi parmi le groupe consistant en de l'aluminium en forme de plaquettes, en des pigments métalliques en forme de plaquettes avec une proportion de cuivre de 60 à 100 % en poids et de mélanges de ces derniers, comportant un revêtement en oxyde de silicium $SiO_x$, x étant in nombre compris entre 1 et 2,
**caractérisé en ce que**
le pigment métallique revêtu contient d'une part des cations métalliques et d'autre part des anions contenant du phosphore et/ou du soufre, les cations métalliques et les anions contenant du phosphore et/ou du soufre étant présents, respectivement indépendamment les uns des autres, sur la surface du pigment à effet métallisé et/ou dans la couche d'oxyde de silicium $SiO_x$, et le rapport des éléments en parts atomique du cation métallique MK et du phosphore P et/ou du soufre S au silicium Si étant défini respectivement conformément aux formules (I) et(II)

$$100\% \times (MK + P) / Si \qquad (I)$$

et/ou

$$100\% \times (MK + S) / Si \qquad (II)$$

et étant compris globalement dans un intervalle de 0,5 à 35 %.

**2.** Pigment à effet métallisé selon la revendication 1,
**caractérisé en ce que**
le cation métallique MK peut former en solution aqueuse avec les anions contenant du phosphore et/ou contenant du soufre à l'intérieur d'un intervalle de pH de 5 à 8, un sel difficilement soluble.

**3.** Pigment à effet métallisé selon l'une quelconque des revendications 1 ou 2,
**caractérisé en ce que**
les cations métalliques et les anions contenant du phosphore et/ou du soufre sont présents de façon prépondérante dans la couche de $SiO_x$.

**4.** Pigment à effet métallisé selon l'une quelconque des revendications 1 ou 2,
**caractérisé en ce que**

les cations métalliques et les anions contenant du phosphore et/ou du soufre sont présents de façon prépondérante à la surface du pigment à effet métallisé.

**5.** Pigment à effet métallisé selon l'une quelconque des revendications 1 à 4,
**caractérisé en ce que**
les cations métalliques sont présents au moins en partie conjointement avec les anions contenant du phosphore et/ou du soufre sous forme de sel difficilement soluble.

**6.** Pigment à effet métallisé selon la revendication 1,
**caractérisé en ce que**
les anions contenant du phosphore et/ou du soufre sont présents de façon prépondérante sur la surface du pigment à effet métallisé et les cations métalliques de façon prépondérante dans la couche de $SiO_x$.

**7.** Pigment à effet métallisé selon la revendication 1,
**caractérisé en ce que**
les cations métalliques sont présents de façon prépondérante sur la surface du pigment à effet métallisé et les anions contenant du phosphore et/ou du soufre de façon prépondérante dans la couche de $SiO_x$.

**8.** Pigment à effet métallisé selon l'une quelconque des revendications précédentes,
**caractérisé en ce que**
pour les anions contenant du phosphore, les cations métalliques sont choisis parmi le groupe consistant en Ag(I), Cu(II), Cd(II), Cr(III), Co(II), Pb(II), Hg(I), Hg(II), Mg(II), Al(III), Zn(II), Sn(II), Ca(II), Sr(II), Ba(II), Mn(II), Bi(III), Zr(IV), Ni(II), Fe(II), Fe(III) ainsi qu'en des mélanges de ceux-ci de même qu'en leurs mélanges avec des ions ammonium.

**9.** Pigment à effet métallisé selon l'une quelconque des revendications précédentes,
**caractérisé en ce que**
la couche de $SiO_x$ est présente en des quantités de 2 % en poids à 25 % en poids, calculées comme $SiO_2$ et rapportées au poids du substrat de pigment à effet métallisé.

**10.** Pigment à effet métallisé selon l'une quelconque des revendications précédentes,
**caractérisé en ce que**
les pigments à effet métallisé sont présents comme poudre, préparation sèche ou pâte et **en ce que** dans et/ou sur la couche d'oxyde de silicium et/ou dans le solvant de la pâte, il y a
0,01 à 1 % en poids d'acide organique et/ou inorganique et
0,01 à 1 % en poids de base organique et/ou inorganique, sachant que les données en % en poids se rapportent au poids total du pigment.

**11.** Pigments à effet métallisé selon l'une quelconque des revendications précédentes,
**caractérisés en ce que**
les pigments à effet métallisé sont présent en une entité, l'entité comprenant au moins trois pigments à effet métallisé revêtus d'oxyde de silicium, dont les valeurs $d_{50}$ des diamètres se distinguent respectivement de 2 à 6 $\mu$m, la plus petite valeur $d_{50}$ d'un pigment à effet métallisé de l'entité étant au maximum de 5 $\mu$m.

**12.** Procédé de préparation de pigments à effet métallisé revêtus d'oxyde de silicium selon l'une quelconque des revendications précédentes,
**caractérisé en ce que**
le procédé comprend les étapes suivantes :

(a) application d'oxyde de silicium sur les pigments à effet métallisé moyennant la réaction, dans un solvant organique, d'un ou de plusieurs alcoxysilanes et/ou d'un ou de plusieurs halogénures de silicium avec de l'eau en présence d'un acide et/ou d'une base comme catalyseur,
(b) addition d'anions contenant du phosphore et/ou du soufre et de cations métalliques sur la surface des pigments à effet métallisé et/ou dans la couche d'oxyde de silicium,
(c) en option, application d'une modification de surface à la surface de l'oxyde de silicium.

**13.** Procédé selon la revendication 12,
**caractérisé en ce que**
l'addition des anions contenant du phosphore et/ou du soufre d'une part et des cations métalliques d'autre part

s'effectue dans des étapes séparées, en même temps ou l'une après l'autre.

**14.** Procédé selon l'une quelconque des revendications 12 à 13,
**caractérisé en ce que**
l'application de l'oxyde de silicium par réaction d'un ou de plusieurs alcoxysilanes avec de l'eau dans un solvant organique est catalysée par des acides et des bases, sachant que

(i) la réaction est effectuée dans une première étape moyennant l'addition d'acide et dans une deuxième étape moyennant l'addition de base ou
(ii) la réaction est effectuée dans une première étape moyennant l'addition de base et dans une deuxième étape moyennant l'addition d'acide.

**15.** Utilisation de pigment à effet métallisé selon l'une quelconque des revendications 1 à 11 dans des produits cosmétiques, des plastiques et des compositions de revêtement, de préférence des peintures, des encres d'imprimerie, des laques, des poudres pour revêtement électrostatique.

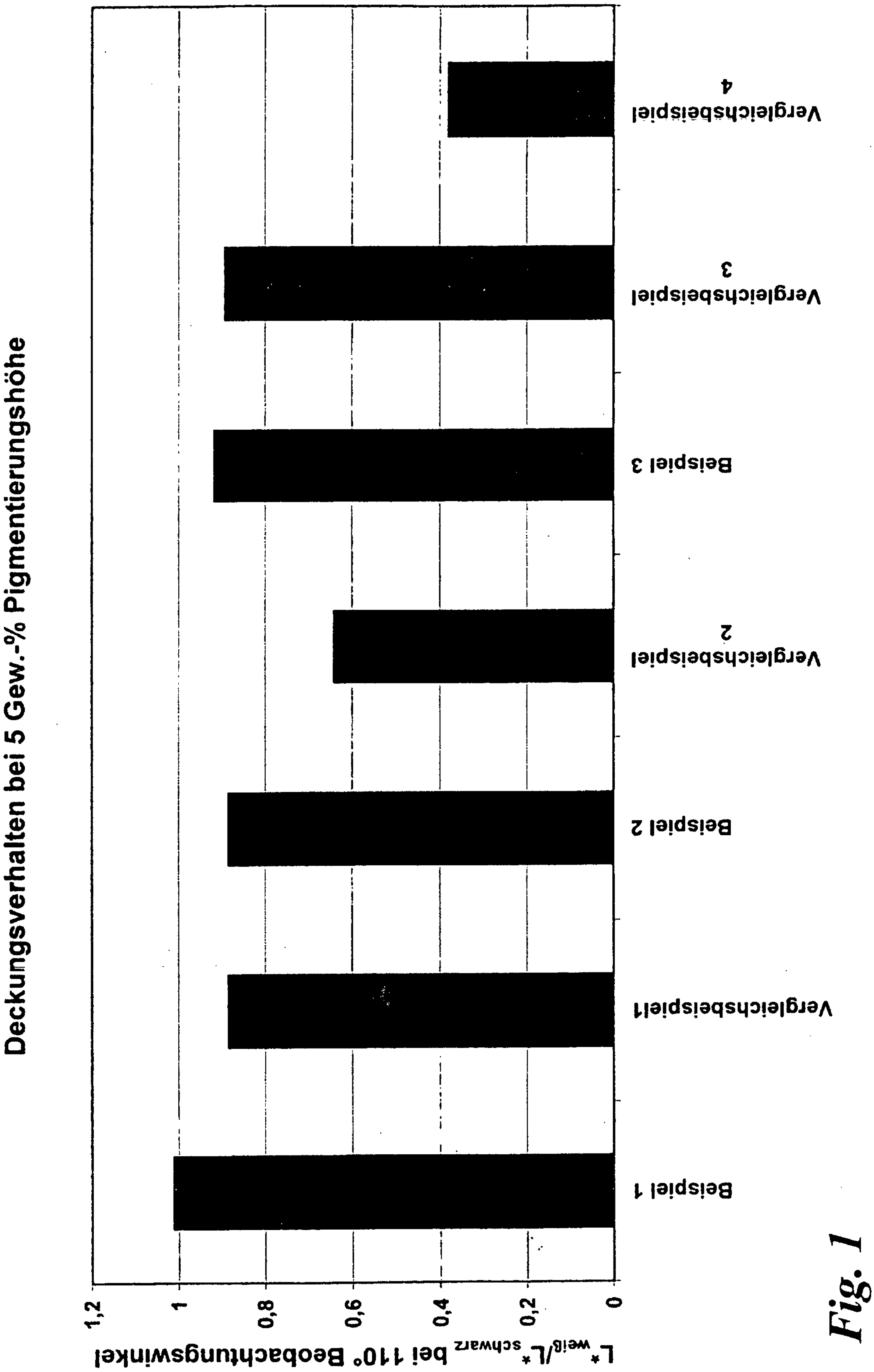
Deckungsverhalten bei 5 Gew.-% Pigmentierungshöhe
L*weiß/L*schwarz bei 110° Beobachtungswinkel
1,2
1
0,8
0,6
0,4
0,2
0
Beispiel 1
Vergleichsbeispiel1
Beispiel 2
Vergleichsbeispiel 2
Beispiel 3
Vergleichsbeispiel 3
Vergleichsbeispiel 4

*Fig. 1*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0259592 A
- US 2885366 A, R.K. Iler
- DE 19820112 A1
- EP 1332714 A1
- WO 2004026268 A2
- EP 1756234 B1
- WO 03014228 A1
- WO 2006066825 A2
- DE 19836810 A1
- DE 4437753 A1
- EP 1619222 A1
- WO 03095564 A1
- DE 10001437 A1
- US 5348579 A
- US 536469 A
- WO 2004092284 A1
- US 6379804 B1
- WO 2009012995 A1
- DE 10315715 A1
- DE 102006062271
- EP 1953195 A1


### In der Beschreibung aufgeführte Nicht-Patentliteratur


- **A. KIEHL ; K. GREIWE.** *Progr. in org. Coatings,* 1999, vol. 37, 179-183
- **R.K. ILER.** *The Chemistry of Silica,* 1979
- **A. KIEHL ; K. GREIWE.** *Progr. in org. Coatings,* 1999, vol. 37, 179-183